(19) **Europäisches Patentamt / European Patent Office / Office européen des brevets**

(11) **EP 2 532 708 A1**

(12) # EUROPEAN PATENT APPLICATION
published in accordance with Art. 153(4) EPC

(43) Date of publication:
**12.12.2012 Bulletin 2012/50**

(21) Application number: **11737196.3**

(22) Date of filing: **31.01.2011**

(51) Int Cl.:
**C08L 27/06** [(2006.01)]  **C08J 3/12** [(2006.01)]
**C08J 3/22** [(2006.01)]  **C08K 3/18** [(2006.01)]
**C08K 5/00** [(2006.01)]  **C08K 5/098** [(2006.01)]
**C08L 29/04** [(2006.01)]

(86) International application number:
**PCT/JP2011/051885**

(87) International publication number:
**WO 2011/093487 (04.08.2011 Gazette 2011/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.07.2010 JP 2010159460**
**14.07.2010 JP 2010159459**
**01.02.2010 JP 2010020181**

(71) Applicant: **Kuraray Co., Ltd.**
**Okayama 710-0801 (JP)**

(72) Inventors:
• **KUSUDOU, Takeshi**
**Kurashiki-shi**
**Okayama 713-8550 (JP)**
• **TSUBOI, Akira**
**Kurashiki-shi**
**Okayama 713-8550 (JP)**
• **MAKI, Hideki**
**Kurashiki-shi**
**Okayama 713-8550 (JP)**
• **NAKAMAE, Masato**
**Kurashiki-shi**
**Okayama 713-8550 (JP)**

(74) Representative: **Müller-Boré & Partner**
**Patentanwälte**
**Grafinger Straße 2**
**81671 München (DE)**

(54) **THERMOSTABILIZER FOR POLYVINYL CHLORIDE, POLYVINYL CHLORIDE RESIN COMPOSITION, AND METHOD FOR PRODUCING THE SAME**

(57) Provided are a thermal stabilizer for polyvinyl chloride, comprising a mixed powder (P) containing a vinyl alcohol-based polymer (A) having an average degree of saponification from 30 to 99.9 mol% and having a viscosity average degree of polymerization of 1000 or less, and a zinc compound (B), wherein a weight ratio A/B of (A) and (B) falls within a range from 1/10 to 10/1, and the mixed powder (P) has 80 weight% or more of particles passing through a screen with 75 $\mu$m openings, and a polyvinyl chloride resin composition, comprising: from 0.1 to 10 parts by weight of the thermal stabilizer for polyvinyl chloride based on 100 parts by weight of a polyvinyl chloride resin. Such polyvinyl chloride resin composition is excellent in the thermal stability while being molded and allows obtaining a less colored molded article.

EP 2 532 708 A1

**Description**

TECHNICAL FIELD

The present invention relates to a thermal stabilizer for polyvinyl chloride used for a polyvinyl chloride resin composition that is preferably used in applications for foods, medical use, household goods, and the like and a polyvinyl chloride resin composition containing the thermal stabilizer for polyvinyl chloride, and to describe further, relates to a polyvinyl chloride resin composition that is good in thermal stability while being molded and allows obtaining a less colored molded article.

BACKGROUND ART

Polyvinyl chloride resins are processed for molding by blending a Ca-Zn based stabilizer, a Ba-Zn based stabilizer, and the like therein, and molded articles thereof are widely used as products suitable for general use and further for foods, medical use, and the like.

However, since these stabilizers have abilities insufficient to inhibit heat deterioration of the polyvinyl chloride resins, they used to have disadvantages, such as impairing initial colorability of the molded articles and having insufficient thermal stability while being molded. Therefore, as a means for improvement of these disadvantages, polyvinyl chloride resin compositions are proposed to which an antioxidant is added or a compound having a hydroxyl group is added.

Patent Document 1 (JP 50-92947A) discloses a method of adding calcium soap, zinc soap, polyol or a derivative thereof, and a neutral inorganic calcium salt to a chloride-containing resin.

Patent Document 2 (JP 54-81359A) discloses a method of adding a water soluble polymer to a chloride-containing polymer.

Patent Document 3 (JP 57-147552A) discloses a method of adding a condensation reaction product of dipentaerythritol and dicarboxylic acid, zinc oxide, zinc carbonate or fatty acid zinc, and hydrotalcite to a chloride-containing resin.

Patent Document 4 (JP 60-238345A) discloses a method of adding a saponified product of an ethylene-vinyl acetate copolymer, having an ethylene unit content of from 20 to 50% and having a degree of saponification of a vinyl acetate unit of 96% or more, and a hydrotalcite-based compound to a thermoplastic resin.

Patent Document 5 (JP 1-178543A) discloses a method of adding metal soap and a saponified product of an ethylene-vinyl acetate copolymer having a copolymer composition that has an ethylene content of from 20 to 75 mol% and has a degree of saponification of a vinyl acetate portion of 50 mol% or more to a halogen-containing thermoplastic resin.

Patent Document 6 (JP 6-287387A) discloses a method of adding a metal salt of an organic acid and acetalized polyvinyl alcohol to a vinyl chloride-based resin.

Patent Document 7 (JP 9-3286A) discloses a method of adding partially saponified polyvinyl alcohol having a degree of saponification of from 70 to 95 mol%, having an average degree of polymerization of from 300 to 2000, and having a terminal mercapto group to a vinyl chloride-based resin.

Patent Document 8 (JP 9-31281A) discloses a method of adding a zinc compound, hydrotalcites, polyvinyl alcohol, and polymethyl methacrylate to a vinyl chloride-based resin.

Non-Patent Document 1 (Japanese Journal of Polymer Science and Technology Vol. 47, No. 3, 197 (1990)) discloses a method of adding zinc stearate-calcium stearate complex soap and completely saponified polyvinyl alcohol having a degree of polymerization of 600 or more to polyvinyl chloride.

Non-Patent Document 2 (Japanese Journal of Polymer Science and Technology Vol. 47, No. 6, 509 (1990)) discloses a method of adding zinc stearate-calcium stearate complex soap and partially saponified polyvinyl alcohol having a degree of polymerization of 500 and having a degree of saponification of 73.6 mol% to polyvinyl chloride.

Non-Patent Document 3 (Japanese Journal of Polymer Science and Technology Vol. 50, No. 2, 65 (1993)) discloses a method of adding zinc stearate-calcium stearate complex soap and an ethylene-vinyl alcohol copolymer having an ethylene content of 29 mol% or more to polyvinyl chloride.

Non-Patent Document 4 (Polymers & Polymer Composites, Vol. 11, 649 (2003)) discloses a method of adding zinc stearate-calcium stearate complex soap, and polyvinyl alcohol having a degree of polymerization of 500 and having a degree of saponification of 98.5 mol% or an ethylene-vinyl alcohol copolymer having an ethylene content of 29 mol% or more to polyvinyl chloride.

Non-Patent Document 5 (Journal of the Adhesion Society of Japan Vol. 43, No. 2, 43 (2007)) discloses a method of adding polyvinyl alcohol having a degree of polymerization of 500 and having a degree of saponification of 88 mol% or polyvinyl alcohol having a degree of polymerization of 1700 and having a degree of saponification of 78 mol% or more, and polymethyl methacrylate to polyvinyl chloride.

However, the polyvinyl chloride resin compositions described in Patent Documents 1 through 8 and Non-Patent Documents 1 through 5 used to have problems of not being sufficient in the long term thermal stability and of a molded article thus obtained being colored.

PRIOR ART DOCUMENTS

Patent Documents

Patent Document 1: JP 50-92947A
Patent Document 2: JP 54-81359A
Patent Document 3: JP 57-147552A
Patent Document 4: JP 60-238345A
Patent Document 5: JP 1-178543A
Patent Document 6: JP 6-287387A
Patent Document 7: JP 9-3286A
Patent Document 8: JP 9-31281A

Non-Patent Documents

Non-Patent Document 1: Japanese Journal of Polymer Science and Technology Vol. 47, No. 3, p. 197 (1990)
Non-Patent Document 2: Japanese Journal of Polymer Science and Technology Vol. 47, No. 6, p. 509 (1990)
Non-Patent Document 3: Japanese Journal of Polymer Science and Technology Vol. 50, No. 2, p. 65 (1993)
Non-Patent Document 4: Polymers & Polymer Composites, Vol. 11, p. 649 (2003)
Non-Patent Document 5: Journal of the Adhesion Society of Japan Vol. 43, No. 2, p. 43 (2007)

SUMMARY OF THE INVENTION

PROBLEMS TO BE SOLVED BY THE INVENTION

It is an object of the present invention to provide a thermal stabilizer for polyvinyl chloride that can improve thermal stability of a vinyl chloride resin composition while being molded and reduce coloration of a molded articles obtained by molding the vinyl chloride resin composition, and a polyvinyl chloride resin composition containing the thermal stabilizer for polyvinyl chloride.

MEANS FOR SOLVING THE PROBLEMS

As a result of intensive studies, the present inventors have found that the thermal stability of a polyvinyl chloride resin composition while being molded can be maintained sufficiently and a molded article is less colored when using a thermal stabilizer for polyvinyl chloride, comprising a mixed powder (P) containing a vinyl alcohol-based polymer (A) (hereinafter, "a vinyl alcohol-based polymer" may be abbreviated as "a PVA") having an average degree of saponification from 30 to 99.9 mol% and having a viscosity average degree of polymerization of 1000 or less, and a zinc compound (B), wherein a weight ratio A/B of (A) and (B) falls within a range from 1/10 to 10/1, and the mixed powder (P) has 80 weight% or more of particles passing through a screen with 75 $\mu$m openings, and thus have come to complete the present invention.

That is, the problems are solved by providing a thermal stabilizer for polyvinyl chloride, comprising a mixed powder (P) containing a PVA (A) having an average degree of saponification from 30 to 99.9 mol% and having a viscosity average degree of polymerization of 1000 or less, and a zinc compound (B), wherein a weight ratio A/B of (A) and (B) falls within a range from 1/10 to 10/1, and the mixed powder (P) has 80 weight% or more of particles passing through a screen with 75 $\mu$m openings.

It is preferred that the mixed powder (P) further contains a calcium compound (C), and a weight ratio A/(B + C) of (A) to a total amount of (B) and (C) falls within a range from 1/20 to 10/2.

It is preferred that the mixed powder (P) is obtained by spray drying a slurry having the zinc compound (B) dispersed in an aqueous solution of the PVA (A).

It is preferred that the mixed powder (P) is obtained by spray drying a slurry having the zinc compound (B) and the calcium compound (C) dispersed in an aqueous solution of the PVA (A). It is also preferred that the mixed powder (P) is obtained by mixing the zinc compound (B) with a powder obtained by spray drying a slurry having the calcium compound (C) dispersed in an aqueous solution of the PVA (A). It is also preferred that the mixed powder (P) is obtained by mixing the calcium compound (C) with a powder obtained by spray drying a slurry having the zinc compound (B) dispersed in an aqueous solution of the PVA (A).

It is preferred that the PVA (A) has an alkyl group, at a terminal, having a carbon number of 6 or more, and it is also preferred that the PVA (A) contains from 0.1 to 20 mol% of ethylene units as a copolymer component, and further it is also preferred that the PVA (A) has at least one type of functional group, at a terminal, selected from a group consisting of a carboxyl group, a sulfonic acid group, and a salt thereof.

The present invention also includes a polyvinyl chloride resin composition, comprising: from 0.1 to 10 parts by weight of the above thermal stabilizer for polyvinyl chloride based on 100 parts by weight of a polyvinyl chloride resin.

In this case, it is preferred to further comprise from 0.001 to 10 parts by weight of a lubricant based on 100 parts by weight of the polyvinyl chloride resin. It is more preferred that the lubricant is a fatty acid ester of polyol, and particularly it is even more preferred that the fatty acid ester of polyol is glycerin monostearate.

Further, the present invention also includes a method of producing the above thermal stabilizer for polyvinyl chloride, comprising the steps of: producing a slurry by dispersing the zinc compound (B) in an aqueous solution of the PVA (A); and obtaining the mixed powder (P) by spray drying the slurry. It also includes a method of producing the above thermal stabilizer for polyvinyl chloride, comprising the steps of: producing a slurry by dispersing the zinc compound (B) and the calcium compound (C) in an aqueous solution of the PVA (A); and obtaining the mixed powder (P) by spray drying the slurry. It also includes a method of producing the above thermal stabilizer for polyvinyl chloride, comprising the steps of: producing a slurry by dispersing the calcium compound (C) in an aqueous solution of the PVA (A); obtaining a powder by spray drying the slurry; and obtaining, by mixing the zinc compound (B) with the powder, the mixed powder (P) It also includes a method of producing the above thermal stabilizer for polyvinyl chloride, comprising the steps of: producing a slurry by dispersing the zinc compound (B) in an aqueous solution of the PVA (A); obtaining a powder by spray drying the slurry; and obtaining, by mixing the calcium compound (C) with the powder, the mixed powder (P).

Further, the present invention also includes a method of producing a polyvinyl chloride resin composition, comprising the step of mixing from 0.1 to 10 parts by weight of a thermal stabilizer for polyvinyl chloride obtained by the above method based on 100 parts by weight of the polyvinyl chloride resin. In this case, it is preferred to further comprise the step of adding from 0.001 to 10 parts by weight of a lubricant based on 100 parts by weight of a polyvinyl chloride resin.

EFFECTS OF THE INVENTION

A polyvinyl chloride resin composition of the present invention is excellent in thermal stability while being molded. Moreover, when using the resin composition, a less colored molded article can be obtained.

MODE FOR CARRYING OUT THE INVENTION

A thermal stabilizer for polyvinyl chloride of the present invention comprises a mixed powder (P) containing a PVA (A) having an average degree of saponification from 30 to 99.9 mol% and having a viscosity average degree of polymerization of 1000 or less, and a zinc compound (B), wherein a weight ratio A/B of (A) and (B) falls within a range from 1/10 to 10/1, and the mixed powder (P) has 80 weight% or more of particles passing through a screen with 75 $\mu$m openings.

The PVA (A) used for the present invention has an average degree of saponification from 30 to 99.9 mol%, preferably from 60 to 96 mol%, and particularly preferably from 70 to 93 mol%. In a case of the average degree of saponification of less than 30 mol%, the long term thermal stability of the polyvinyl chloride resin composition decreases and thus it is not preferred. When a zinc compound (B) and/or a calcium compound (C) is dispersed in an aqueous solution of the PVA (A) for spray drying as an approach to obtain a mixed powder (P) described later, when the average degree of saponification is less than 30 mol%, there may be a case of decreasing water solubility not to allow preparation of an aqueous solution of the PVA (A). The average degree of saponification of the PVA is a value measured in accordance with JIS K6726.

The PVA (A) has a viscosity average degree of polymerization (hereinafter, may be referred to simply as a degree of polymerization) of 1000 or less, preferably 800 or less, and particularly preferably 450 or less. Although a lower limit of the viscosity average degree of polymerization is not particularly limited, the viscosity average degree of polymerization is preferably 50 or more and more preferably 100 or more from the perspective of production of the PVA. When the viscosity average degree of polymerization is more than 1000, the long term thermal stability of a polyvinyl chloride resin composition seriously decreases and thus it is not preferred. The viscosity average degree of polymerization of the PVA is a value measured in accordance with JIS K6726. That is, it can be obtained by the following expression using limiting viscosity [$\eta$] that is measured in water at 30°C after resaponifying the PVA to a degree of saponification of 99.5 mol% or more and purifying it.

$$P = ([\eta] \times 1000/8.29)^{(1/0.62)}$$

From the perspective of enlarging a preferred molding temperature range when molding a polyvinyl chloride resin composition, it is preferred that the PVA (A) contains two or more types of PVA having an average degree of saponification from 75 to 99.9 mol% and having a viscosity average degree of polymerization of 450 or less and also that the two or more types of PVA have average degrees of saponification different by 5 mol% or more. When the PVA (A) contains three or more types of PVA, that " PVA have average degrees of saponification different by 5 mol% or more" means that, among the plurality of PVA, a difference in the average degrees of saponification between the PVAs having the greatest and smallest average degrees of saponification is 5 mol% or more.

In the above case, it is preferred that the PVA (A) contains a PVA (a1), having an average degree of saponification from 75 to 85 mol% and having a viscosity average degree of polymerization of 450 or less, and a PVA (a2), having an average degree of saponification from 85 to 95 mol% and having a viscosity average degree of polymerization of 450 or less. At this time, the PVA (a1) has an average degree of saponification more preferably from 78 to 83 mol% and even more preferably from 79 to 82 mol%. The PVA (a2) has an average degree of saponification more preferably from 85 to 95 mol%, even more preferably from 87 to 94 mol%, and particularly preferably from 88 to 93 mol%.

When using the PVAs (a1) and (a2), a weight ratio (a1)/(a2) thereof is preferably from 20/80 to 80/20, more preferably from 30/70 to 70/30, and even more preferably from 40/60 to 60/40.

The PVA (A) can be produced by polymerizing a vinyl ester-based monomer by employing a conventionally known process, such as bulk polymerization, solution polymerization, suspension polymerization, emulsion polymerization, and dispersion polymerization, and saponifying the vinyl ester-based polymer thus obtained. Polymerization processes preferred from the industrial perspective are solution polymerization, emulsion polymerization, and dispersion polymerization. For the polymerization operation, any polymerization system can be employed among batch process, semi-batch process, and continuous process.

The vinyl ester-based monomer allowed to be used for the polymerization may include, for example, vinyl acetate, vinyl formate, vinyl propionate, vinyl caprylate, vinyl versatate, and the like, and among them, vinyl acetate is preferred from the industrial perspective.

Upon the polymerization of the vinyl ester-based monomer, it is allowed to copolymerize the vinyl ester-based monomer with another monomer as long as not impairing the spirit of the present invention. Monomers that can be used may include, for example, $\alpha$-olefins, such as ethylene, propylene, n-butene, and isobutylene; acrylic acid and a salt thereof; acrylic acid esters, such as methyl acrylate, ethyl acrylate, n-propyl acrylate, i-propyl acrylate, n-butyl acrylate, i-butyl acrylate, t-butyl acrylate, 2-ethylhexyl acrylate, dodecyl acrylate, and octadecyl acrylate; methacrylic acid and a salt thereof; methacrylic acid esters, such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, dodecyl methacrylate, and octadecyl methacrylate; acrylamide; acrylamide derivatives, such as N-methylacrylamide, N-ethylacrylamide, N,N-dimethylacrylamide, diacetone acrylamide, acrylamide propanesulfonic acid and a salt thereof, acrylamide propyl dimethylamine and a salt thereof or a quaternary salt thereof, and N-methylolacrylamide and a derivative thereof; methacrylamide; methacrylamide derivatives, such as N-methyl methacrylamide, N-ethyl methacrylamide, methacrylamide propanesulfonic acid and a salt thereof, methacrylamide propyl dimethylamine and a salt thereof or a quaternary salt thereof, and N-methylolmethacrylamide and a derivative thereof; vinyl ethers, such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, and stearyl vinyl ether; nitriles, such as acrylonitrile and methacrylonitrile; vinyl halides, such as vinyl chloride and vinyl fluoride; vinylidene halides, such as vinylidene chloride and vinylidene fluoride; allyl compounds, such as allyl acetate and allyl chloride; unsaturated dicarboxylic acids, such as maleic acid, itaconic acid, and fumaric acid, and salts thereof or esters thereof; vinyl silyl compounds, such as vinyl trimethoxysilane; and isopropenyl acetate.

Among them, those obtained by copolymerizing ethylene are preferred, which contains preferably from 0.1 to 20 mol% of ethylene units, more preferably from 0.5 to 18 mol%, and even more preferably from 1 to 15 mol%. When the content of ethylene units exceeds 20 mol%, the long term thermal stability of a polyvinyl chloride resin composition sometimes decreases, and further in preparing the mixed powder (P) described later, when preparing the aqueous PVA solution, there may be a case of the water solubility of the PVA being low and making the preparation difficult.

1 Upon the polymerization of the vinyl ester-based monomer, for the purpose of adjustment of the degree of polymerization of the PVA (A) thus obtained or the like, a chain transfer agent is allowed to coexist. The chain transfer agent may include aldehydes, such as acetaldehyde, propionaldehyde, butylaldehyde, and benzaldehyde; ketones, such as acetone, methyl ethyl ketone, hexanone, and cyclohexanone; mercaptans, such as mercaptan having an alkyl group having a carbon number of 6 or more, mercaptan having a carboxyl group, mercaptan having a sulfonic acid group, and mercaptan having a hydroxyl group; thiocarboxylic acids, such as thioacetic acid; and halogenated hydrocarbons, such as trichloroethylene and perchloroethylene.

Among all, aldehydes and ketones are used preferably. Although the amount of the chain transfer agent to be added is determined according to the chain transfer constant of the chain transfer agent to be added and the intended degree of polymerization of the PVA, it is generally desired to be from 0.1 to 10 weight% to the PVA.

In the present invention, it is preferred that the PVA (A) has an alkyl group, at a terminal, having a carbon number of 6 or more. As an approach to introduce an alkyl group with a carbon number of 6 or more into a terminal, an approach to use the above chain transfer agent is used mainly. As a method of obtaining the PVA more economically and efficiently, preferred is a method of polymerizing vinyl esters, such as vinyl acetate, in the presence of a chain transfer agent having an alkyl group with a carbon number of 6 or more, particularly mercaptan having an alkyl group with a carbon number of 6 or more and subsequently saponifying it (refer to JP 59-166505A and JP 1-240501A).

As the chain transfer agent having an alkyl group with a carbon number of 6 or more, it is possible to use aldehydes having a carbon number of 6 or more, such as n-hexyl aldehyde, n-octyl aldehyde, 2-ethyl-hexyl aldehyde, n-capric aldehyde, n-decyl aldehyde, n-undecyl aldehyde, n-lauryl aldehyde, n-tridecyl aldehyde, cetyl aldehyde, palmityl aldehyde, and stearyl aldehyde; or mercaptans having a carbon number of 6 or more, such as n-hexyl mercaptan, n-octyl mercaptan, n-decyl mercaptan, n-dodecyl mercaptan, and n-octadecyl mercaptan. The carbon number of an alkyl group in the above chain transfer agent having an alkyl group is more preferably 8 or more.

Further, in the present invention, it is preferred that the PVA (A) has at least one type of functional group, at a terminal, selected from a group consisting of a carboxyl group, a sulfonic acid group, and a salt thereof. As an approach to introduce the at least one type of functional group selected from a group consisting of a carboxyl group, a sulfonic acid group, and a salt thereof into a terminal, an approach to use the above chain transfer agent is used mainly. As a method of obtaining the PVA more economically and efficiently, preferred is a method of polymerizing vinyl esters, such as vinyl acetate, in the presence of a chain transfer agent having the at least one type of functional group selected from a group consisting of a carboxyl group, a sulfonic acid group, and a salt thereof, particularly in the presence of thiol having these functional groups and subsequently saponifying it (refer to WO 91/15518 A1).

Examples of thiol having a carboxyl group may include thioglycolic acid, 2-mercapto propionic acid, 3-mercapto propionic acid, thiomalic acid, 2-mercapto benzoic acid, 3-mercapto benzoic acid, 4-mercapto benzoic acid, and 4-carboxyphenyl ethyl thiol. Examples of thiol having a sulfonic acid group may include 2-mercapto ethanesulfonic acid, 3-mercapto propanesulfonic acid, and 2-mercapto ethylbenzenesulfonic acid. Among them, it is preferred to use thiol having a sulfonic acid group. The above carboxyl groups or sulfonic acid groups may be an ester thereof and may also be a salt thereof. Such a salt may include an alkali metal salt and the like. For example, a salt of a carboxyl group or a sulfonic acid group may be generated, after going through a step, such as saponification, when introducing a chain transfer agent having a carboxyl group or a sulfonic acid group into the PVA, by replacing hydrogen ions with alkali metal cations.

The PVA (A) used for the present invention has a content of 1,2-glycol bond is preferably from 1.2 to 2.5 mol%, more preferably from 1.3 to 2.2 mol%, and even more preferably from 1.4 to 2.0 mol%.

To the saponification reaction of the vinyl ester-based polymer, an alcoholysis or hydrolysis reaction can be applied using conventionally known basic catalysts, such as sodium hydroxide, potassium hydroxide, and sodium methoxide, or acid catalysts, such as p-toluenesulfonic acid. The solvent used for the saponification reaction may include alcohols, such as methanol and methanol; esters, such as methyl acetate and ethyl acetate; ketones, such as acetone and methyl ethyl ketone; and aromatic hydrocarbons, such as benzene and toluene, and one type of them can be used singly, or two or more types can also be used in combination. Among all, it is preferred for the convenience to carry out a saponification reaction using methanol or mixed solution of methanol and methyl acetate as the solvent in the presence of sodium hydroxide as the basic catalyst.

In the present invention, the PVA (A) may also contain an acid having pKa at 25°C of from 3.5 to 5.5 and/or a metal salt thereof. The type of the acid is not particularly limited, and the specific examples may include acetic acid (pKa of 4.76), propionic acid (pKa of 4.87), butyric acid (pKa of 4.63), octanoic acid (pKa of 4.89), adipic acid (pKa of 5.03), benzoic acid (pKa of 4.00), formic acid (pKa of 3.55), valeric acid (pKa of 4.63), heptanoic acid (pKa of 4.66), lactic acid (pKa of 3.66), phenylacetic acid (pKa of 4.10), isobutyric acid (pKa of 4.63), cyclohexanecarboxylic acid (pKa of 4.70), and the like. Particularly preferably used acids are acetic acid, propionic acid, and lactic acid. It is also possible to use metal salts of the acids above. Although the type of the metal salt is not particularly limited, a salt of alkali metal, such as sodium and potassium, or an alkali earth metal salt, such as magnesium and calcium, is normally used.

The acid having pKa of from 3.5 to 5.5 and/or a metal salt thereof is preferably contained at a ratio of from 0.05 to 5 parts by weight based on 100 parts by weight of the PVA, more preferably from 0.1 to 3 parts by weight, and even more preferably from 0.15 to 2 parts by weight. The long term thermal stability of a polyvinyl chloride resin composition decreases in a case that the acid and/or a metal salt thereof is contained less than 0.05 parts by weight to the PVA, and in a case of exceeding 5 parts by weight, there is a possibility that a molded article thus obtained is colored.

The method of containing the acid and/or a metal salt thereof in a predetermined amount is not particularly limited and may include, for example, a method of adjusting the type, the amount, and the like of the alkali catalyst used for the saponification when producing the PVA, a method of adding or removing the acid and/or a metal salt thereof after producing the PVA.

It is preferred that the PVA (A) used for the present invention has 80 weight% or more of particles passing through a screen with 75 μm openings, and even more preferred that it has 85 weight% or more of particles passing through a screen with 75 μm openings. Such PVA may be a product of PVA forcibly ground for micronization and may also be particles obtained by spray drying using an aqueous solution of a PVA (A) in an approach described later.

The zinc compound (B) used for the present invention may include aliphatic carboxylates of zinc, such as zinc stearate, zinc laurate, and zinc oleate; aromatic carboxylates of zinc, such as zinc benzoate and zinc p-t-butyl benzoate; zinc salts of an organic acid, such as an amino acid zinc salt and a phosphate zinc salt; inorganic zinc salts, such as zinc oxide and zinc carbonate, and they may also be used together. Among them, zinc stearate, zinc laurate, and zinc oleate are preferred, and zinc stearate and zinc laurate are more preferred. In addition, it is preferred that the zinc compound (B) used for the present invention has 80 weight% or more of particles passing through a screen with 75 μm openings, and it is even more preferred that it has 85 weight% or more of particles passing through a screen with 75 μm openings.

It is preferred that the mixed powder (P) further contains a calcium compound (C), and a weight ratio A/(B + C) of (A) to a total amount of (B) and (C) falls within a range from 1/20 to 10/2.

The calcium compound (C) used for the present invention may include aliphatic carboxylates of calcium, such as calcium stearate, calcium laurate, and calcium oleate; aromatic carboxylates of calcium, such as calcium benzoate and calcium p-t-butyl benzoate; calcium salts of an organic acid, such as an amino acid calcium salt and a phosphate calcium salt; inorganic calcium salts, such as calcium oxide and calcium carbonate, and they may also be used together. Among them, calcium stearate, calcium laurate, calcium oleate, and calcium carbonate are preferred, and calcium stearate, calcium laurate, and calcium carbonate are more preferred. In addition, it is preferred that the calcium compound (C) used for the present invention has 80 weight% or more of particles passing through a screen with 75 μm openings, and it is even more preferred that it has 85 weight% or more of particles passing through a screen with 75 μm openings.

The mixed powder (P) constituting a thermal stabilizer for polyvinyl chloride of the present invention contains the PVA (A) having an average degree of saponification from 30 to 99.9 mol% and having a viscosity average degree of polymerization of 1000 or less, and the zinc compound (B). The weight ratio A/B of the PVA (A) and the zinc compound (B) falls within a range from 1/10 to 10/1, and preferably falls within a range from 1/5 to 5/1. In a case that the weight ratio A/B is less than 1/10, that is, the amount of PVA (A) is low, a time period of blackening the polyvinyl chloride resin composition is short and the thermal stability becomes insufficient. On the contrary, in a case that the weight ratio A/B is more than 10/1, that is, the amount of zinc compound (B) is low, the coloration of a molded article thus obtained becomes noticeable.

When the mixed powder (P) further contains a calcium compound (C), it is more preferred that a weight ratio A/(B + C) of (A) to a total amount of (B) and (C) falls within a range from 1/10 to 10/1. In a case that the weight ratio A/(B + C) is less than 1/20, that is, the amount of PVA (A) is low, there is a risk of shortening a time period of blackening the polyvinyl chloride resin composition and making the thermal stability insufficient. On the contrary, in a case that the weight ratio A/(B + C) is more than 10/2, that is, the amount of zinc compound (B) and calcium compound (C) is low, there is a risk of coloring a molded article thus obtained.

Although the weight ratio B/D of the zinc compound (B) and the calcium compound (C) is not particularly limited, it falls within a range preferably from 1/20 to 20/1 and even more preferably from 1/10 to 10/1. When the weight ratio B/D is less than 1/20, the blackening itself of a polyvinyl chloride resin composition is alleviated while the colorability of a molded article is sometimes worsened. On the contrary, when the weight ratio B/D exceeds 20/1, the blackening time period is sometimes shortened.

The mixed powder (P) has 80 weight% or more of particles passing through a screen with 75 μm openings, and preferably 85 weight% or more of particles passing through a screen with 75 μm openings. When the amount of particles passing through a screen with 75 μm openings is less than 80 weight%, there is a possibility of not achieving an object of the present invention in which a vinyl chloride resin composition thus obtained is excellent in the thermal stability while being molded and a less colored molded article is obtained.

Although the form of mixed powder (P) may be a simple powder blend of the PVA (A) powder and the zinc compound (B) powder described above, it is preferably a mixed powder containing a powder obtained by spray drying a slurry having the zinc compound (B) and/or the calcium compound (C) dispersed in an aqueous solution of the PVA (A). At this time, it is preferred that the concentration of the aqueous PVA (A) solution falls within a range from 3 to 30 weight%. It is also preferred that the concentration of the PVA (A), the zinc compound (B), and the calcium compound (C) in total in the slurry falls within a range from 5 to 60 weight% and even more preferred that it falls within a range from 10 to 50 weight%.

When dispersing the zinc compound (B) and/or the calcium compound (C) in the aqueous PVA (A) solution, a wetting agent may also be used together in a range of not impairing the effects of the present invention in a case of not easily dispersed. It is preferred that the wetting agent is a known nonionic or anionic surfactant. Although the amount of the wetting agent to be used is not particularly limited, it preferably falls within a range from 0.001 to 5 parts by weight based on 100 parts by weight of a total of the zinc compound (B) and the calcium compound (C).

It is specifically preferred that the form of mixed powder (P) is a mixed powder obtained by spray drying a slurry having the zinc compound (B) dispersed in an aqueous solution of the PVA (A). At this time, it is even more preferred that it is a mixed powder obtained by mixing the calcium compound (C) with a powder obtained by spray drying a slurry having the zinc compound (B) dispersed in an aqueous solution, of the PVA (A).

It is also preferred that the form of mixed powder (P) is a mixed powder obtained by spray drying a slurry having the zinc compound (B) and the calcium compound (C) dispersed in an aqueous solution of the PVA (A).

It is also preferred that the form of mixed powder (P) is a product obtained by mixing the zinc compound (B) powder with a powder obtained by spray drying a slurry having the calcium compound (C) dispersed in an aqueous solution of the PVA (A).

As long as not inhibiting the effects of the present invention, the mixed powder (P) may further contain dipentaerythritol. It is preferred that the dipentaerythritol has 80 weight% or more of particles passing through a screen with 75 μm openings.

The method of containing the dipentaerythritol in the mixed powder (P) is not particularly limited. For example, it may include a containing method by blending a dipentaerythritol powder together with other powders when preparing the mixed powder (P) by simply blending each powder and a containing method by dispersing a dipentaerythritol powder together with other powders in a slurry when preparing the mixed powder (P) using spray drying.

As long as not inhibiting the effects of the present invention, the mixed powder (P) may further contain an alkyl ester of polyol. An alkyl ester of polyol is a compound obtained by esterification of polyol and carboxylic acid. It is preferred that the alkyl ester of polyol has 80 weight% or more of particles passing through a screen with 75 μm openings.

The polyol used for the esterification may include glycerin, pentaerythritol, dipentaerythritol, xylitol, sorbitol, and mannitol, and particularly pentaerythritol and dipentaerythritol are preferred. The carboxylic acid used for the esterification may include aliphatic dicarboxylic acids, such as oxalic acid, malonic acid, succinic acid, glutaric acid, adipic acid, pimelic acid, suberic acid, azelaic acid, and sebacic acid, and aromatic dicarboxylic acids, such as phthalic acid, isophthalic acid, and terephthalic acid, and particularly adipic acid is preferred.

Among the alkyl esters of polyol obtained from the polyol and the carboxylic acid, pentaerythritol adipic acid ester and dipentaerythritol adipic acid ester are preferred, and a mixture of them is more preferred for the easy availability.

The method of containing an alkyl ester of polyol in the mixed powder (P) is not particularly limited, and a method similar to the case of dipentaerythritol can be used.

As a raw material to produce a polyvinyl chloride resin used for the present invention, as well as a vinyl chloride monomer, a mixture having a vinyl chloride monomer as a main component and a monomer that is copolymerizable therewith (50 weight% or more of the vinyl chloride monomer) is used. The monomer copolymerized with the vinyl chloride monomer may include vinyl esters, such as vinyl acetate and vinyl propionate; (meth)acrylic esters, such as methyl (meth)acrylate and ethyl (meth)acrylate; olefins, such as ethylene and propylene; maleic anhydride, acrylonitrile, styrene, vinylidene chloride, and the like.

As a method of producing the polyvinyl chloride resin using these monomers, a method of suspension polymerizing the monomer in the presence of a polymerization initiator is preferred. In such a case, a normally used dispersion stabilizer is used that is, for example, a water soluble cellulose ether, such as methylcellulose, hydroxyethyl cellulose, hydroxypropyl cellulose, hydroxypropyl methylcellulose; a water soluble polymer, such as a PVA and gelatin; an oil soluble emulsifier, such as sorbitan monolaurate, sorbitan trioleate, glycerin tristearate, and an ethylene oxide-propylene oxide block copolymer; a water soluble emulsifier, such as polyoxyethylene sorbitan monolaurate, polyoxyethylene glycerin oleate, and sodium laurate. Among them, a PVA having a degree of saponification of from 65 to 99 mol% and having a degree of polymerization of from 500 to 4000 is preferably used, which is added preferably from 0.01 to 2.0 parts by weight based on 100 parts by weight of vinyl chloride.

As the initiator used for the polymerization, an oil soluble or water soluble polymerization initiator can be used that has been used for polymerization of a vinyl chloride monomer or the like conventionally. The oil soluble polymerization initiator may include, for example, percarbonate compounds, such as diisopropyl peroxydicarbonate, di-2-ethylhexyl peroxydicarbonate, and diethoxyethyl peroxydicarbonate; perester compounds, such as t-butyl peroxyneodecanoate, t-butyl peroxypivalate, t-hexyl peroxypivalate, and α-cumyl peroxyneodecanoate; peroxides, such as acetyl cyclohexyl sulfonyl peroxide, 2,4,4-trimethylpentyl-2-peroxyphenoxyacetate, 3,5,5-trimethyl hexanoyl peroxide, and lauroyl peroxide; azo compounds, such as 2,2'-azobis-2,4-dimethylvaleronitrile and 2,2'-azobis(4-methoxy-2,4-dimethylvaleronitrile), and the like. The water soluble polymerization initiator may include, for example, potassium persulfate, ammonium persulfate, hydrogen peroxide, cumene hydroperoxide, and the like. One type of these oil soluble or water soluble polymerization initiators can be used singly or two or more types can also be used in combination.

Upon polymerization, it is possible to add various other additives to the polymerization reaction system as needed. The additives may include, for example, polymerization regulators, such as aldehydes, halogenated hydrocarbons, and mercaptans; polymerization inhibitors, such as a phenol compound, a sulfur compound, and an N-oxide compound, and the like. In addition, it is also possible to optionally add a pH adjuster, a crosslinking agent, and the like.

Upon polymerization, the polymerization temperature is not particularly limited and it can also be adjusted to a low temperature at approximately 20°C as well as a high temperature at over 90°C. It is also one of preferred embodiments to use a polymerization vessel with a reflux condenser to enhance the heat removal efficiency of the polymerization reaction system.

For the polymerization, it is possible to optionally add additives, such as antiseptics, mildewcides, antiblocking agents, defoamers, antifouling agents, and antistatics, that are normally used for polymerization as needed.

The polyvinyl chloride resin composition of the present invention contains from 0.1 to 10 parts by weight, preferably from 0.5 to 5 parts by weight of the thermal stabilizer for polyvinyl chloride described above based on 100 parts by weight of the polyvinyl chloride resin. There is a risk of not obtaining a sufficient thermal stabilizing effect when the content is less than 0.1 parts by weight, and there is a risk of blackening a polyvinyl chloride molded article when it exceeds 10 parts by weight. A method of mixing a polyvinyl chloride resin and a thermal stabilizer for polyvinyl chloride is not particularly limited, and a method of mixing the thermal stabilizer powder with the polyvinyl chloride resin powder before thermoforming, a method of molding by mixing while feeding the thermal stabilizer from a side feeder or the like when thermoforming polyvinyl chloride, and the like are employed appropriately.

Together with the polyvinyl chloride resin composition of the present invention, it is possible to use stabilizers, phenolic antioxidants, phosphorous antioxidants, light stabilizers, ultraviolet absorbers, antifog agents, antistatics, flame retardants, lubricants, modifiers, reinforcements, pigments, blowing agents, plasticizers, and the like that are normally used. To the polyvinyl chloride resin composition of the present invention, another resin may also be mixed as long as not impairing the mechanical properties. A method of blending these additives may include a method of blending them at the same time of mixing the thermal stabilizer powder with the polyvinyl chloride resin powder before thermoforming, a method of blending the additives from a side feeder or the like when thermoforming the polyvinyl chloride resin composition, and the like.

The lubricants may include hydrocarbons, such as liquid paraffin, natural paraffin, micro wax, and polyethylene wax; fatty acids, such as stearic acid and lauric acid; fatty acid amides, such as stearic amide, palmitic amide, methylenebisstearoamide, and ethylenebisstearoamide; fatty acid esters of monoalcohol, such as butyl stearate; fatty acid esters of polyol, such as hydrogenated castor oil, ethylene glycol monostearate, and glycerin monostearate; alcohols, such as cetyl alcohol and stearyl alcohol. Among them, in a case of using a fatty acid ester of polyol, the effects of the present invention are sometimes exhibited even more. The lubricant is added preferably from 0.001 to 10 parts by weight based on 100 parts by weight of the polyvinyl chloride resin, and even more preferably from 0.05 to 5 parts by weight.

As the stabilizer, well known ones can be used and they may specifically include organic metal salts, such as soap of alkaline earth metals, like calcium soap and barium soap, aluminum soap, and organic phosphoric acid metal salts; inorganic metal salts, such as metal oxide, metal hydroxide, metal carbonate, and inorganic complex metal salts, like zeolite; inorganic complex metal hydroxides of clay mineral, such as hydrotalcite; halogen oxy acid salts, such as barium chlorate, barium perchlorate, and sodium perchlorate; and non-metallic stabilizers, such as β-diketone, polyol, and epoxy compounds.

The plasticizer may include, for example, ester-based plasticizers, such as an ester of an acid, like phthalic acid, trimellitic acid, pyromellitic acid, adipic acid, sebacic acid, and azelaic acid, and a single linear or branched alkyl alcohol, or a mixture thereof, like n-propanol, isopropanol, n-butanol, isobutanol, t-butanol, n-pentanol, isopentanol, t-pentanol, n-hexanol, isohexanol, n-heptanol, isoheptanol, n-octanol, isooctanol, 2-ethylhexanol, n-nonanol, isononanol, n-decanol, isodecanol, lauryl alcohol, myristyl alcohol, palmityl alcohol, and stearyl alcohol, and an ester of butanediol and adipic acid; epoxy-based plasticizers, such as epoxidized soybean oil, epoxidized linseed oil, epoxidized castor oil, epoxidized linseed oil fatty acid butyl, octyl epoxy stearate, epoxy triglyceride, diisodecyl epoxy-hexahydrophthalate, or a low molecular weight reaction product resin of bisphenol A with epichlorohydrin; and phosphate-based plasticizers, such as tricresyl phosphate, trixylenyl phosphate, monobutyl dixylenyl phosphate, and trioctyl phosphate.

The phenolic antioxidant may be any of those used normally, and may include, for example, 2,6-di-t-butyl-p-cresol, 2,6-diphenyl-4-octadecyloxyphenol, stearyl(3,5-dit-butyl-4-hydroxyphenyl)-propionate, distearyl(3,5-di-t-butyl-4-hydroxybenzyl)phosphonate, thiodiethylene glycol bis[(3,5-di-t-butyl-4-hydroxyphenyl)propionate], 1,6-hexamethylene bis[(3,5-di-t-butyl-4-hydroxyphenyl)propionate], 1,6-hexamethylene bis[(3,5-di-t-butyl-4-hydroxyphenyl)propionic acid amide], 4,4'-thiobis(6-t-butyl-m-cresol), 2,2'-methylene bis(4-methyl-6-t-butylphenol), 2,2'-methylene bis(4-ethyl-6-t-butylphenol), bis[3,3-bis(4-hydroxy-3-t-butylphenyl)butyric acid]glycol ester, 2,2'-ethylidene bis(4,6-di-t-butylphenol), 2,2'-ethylidene bis(4-s-butyl-6-t-butylphenol), 1,1,3-tris(2-methyl-4-hydroxy-5-t-butylphenyl)butane, bis[2-t-butyl-4-methyl-6-(2-hydroxy-3-t-butyl-5-methylbenzyl)phenyl]terephthalate, 1,3,5-tris(3,5-di-t-butyl-4-hydroxybenzyl)-2,4,6-trimethylbenzene, 1,3,5-tris[(3,5-di-t-butyl-4-hydroxyphenyl)propionyloxyethyl]isocyanurate, tetrakis [methylene-3-(3,5-di-t-butyl-4-hydroxyphenyl)propionate]methane, 2-t-butyl-4-methyl-6-(2-acryloyloxy-3-t-butyl-5-methylbenzyl)phenol, 3,9-bis[1,1-dimethyl-2-{(3-t-butyl-4-hydroxy-5-methylphenyl)propionyloxy}ethyl]-2,4,8,10-tetraoxaspiro[5.5]undecane, and triethylene glycol bis[(3-t-butyl-4-hydroxy-5-methylphenyl)propionate]. The phenolic antioxidant is added in an amount of preferably from 0.01 to 5 parts by weight based on 100 parts by weight of the polyvinyl chloride resin, and even more preferably from 0.1 to 3 parts by weight.

The phosphorous antioxidant may be any of those used normally, and may include, for example, trisnonylphenyl phosphite, tris(2,4-di-t-butylphenyl)phosphite, tris[2-t-butyl-4-(3-t-butyl-4-hydroxy-5-methylphenylthio)-5-methylphenyl] phosphite, tridecyl phosphite, octyl diphenyl phosphite, di(decyl) monophenyl phosphite, di(tridecyl)pentaerythritol diphosphite, distearyl pentaerythritol diphosphite, di(nonylphenyl)pentaerythritol diphosphite, bis(2,4-di-t-butylphenyl)pentaerythritol diphosphite, bis(2,6-di-t-butyl-4-methylphenyl)pentaerythritol diphosphite, bis(2,4,6-tri-t-butylphenyl)pentaerythritol diphosphite, tetra(tridecyl)isopropylidenediphenol diphosphite, tetra(tridecyl)-4,4'-n-butylidenebis(2-t-butyl-5-methylphenol)diphosphite, hexa (tridecyl) -1,1,3-tris (2-methyl-4-hydroxy-5-t-butylphenyl)butane triphosphite, tetrakis (2,4-di-t-butylphenyl)biphenylene diphosphonite, 9,10-dihydro-9-oxa-10-phosphaphenanthrene-10-oxide, and 2,2'-methylenebis(4-methyl-6-t-butylphenyl)-2-ethylhexyl phosphite. The phosphorous antioxidant is added in an amount of preferably from 0.001 to 5 parts by weight based on 100 parts by weight of the polyvinyl chloride resin, and even more preferably from 0.005 to 3 parts by weight.

The ultraviolet absorber may include, for example, 2-hydroxybenzophenones, such as 2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone); 2-(2-hydroxyphenyl) benzotriazoles, such as 2-(2-hydroxy-5-t-octylphenyl)benzotriazole, 2-(2-hydroxy-3,5-di-t-butylphenyl)-5-chlorobenzotriazole, 2-(2-hydroxy-3-t-butyl-5-methylphenyl)-5-chlorobenzotriazole, 2-(2-hydroxy-3,5-dicumylphenyl)benzotriazole, 2,2'-methylenebis(4-t-octyl-6-benzotriazolyl)phenol, and a polyethylene glycol ester of 2-(2-hydroxy-3-t-butyl-5-carboxyphenyl)benzotriazole; benzoates, such as phenyl salicylate, resorcinol monobenzoate, 2,4-di-t-butylphenyl-3,5-di-t-butyl-4-hydroxybenzoate, and hexadecyl-3,5-di-t-butyl-4-hydroxybenzoate; substituted oxanilides, such as 2-ethyl-2'-ethoxyoxanilide, and 2-ethoxy-4'-dodecyloxanilide; and cyanoacrylates, such as ethyl-$\alpha$-cyano-$\beta,\beta$-diphenylacrylate and methyl-2-cyano-3-methyl-3-(p-methoxyphenyl)acrylate. The ultraviolet absorber is added in an amount of preferably from 0.005 to 10 parts by weight based on 100 parts by weight of the polyvinyl chloride resin, and even more preferably from 0.01 to 5 parts by weight.

The light stabilizer may include, for example, hindered amine compounds, such as 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, bis(1,2,2,6,6-pentamethyl-4-piperidyl)sebacate, tetrakis(2,2,6,6-tetramethyl-4-piperidyl)butanetetracarboxylate, tetrakis(1,2,2,6,6-pentamethyl-4-piperidyl)butanetetracarboxylate, bis(1,2,2,6,6-pentamethyl-4-piperidyl)-di(tridecyl) - 1,2,3,4-butanetetracarboxylate, bis(1,2,2,6,6-pentamethyl-4-hydroxybenzyl)malonate, a 1-(2-hydroxyethyl)-2,2,6,6-tetramethyl-4-piperidinol/diethyl succinate polycondensation product, a 1,6-bis(2,2,6,6-tetraethyl-4-piperidylamino)hexane/dibromoethane polycondensation product, a 1,6-bis(2,2,6,6-tetramethyl-4-piperidylamino)hexane/2,4-dichloro-6-morpholino-s-triazine polycondensation product, a 1,6-bis(2,2,6,6-tetramethyl-4-piperidylamino)hexane/2,4-dichloro-6-t-octylamino-s-triazine polycondensation product, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,6,11-tris[2,4-bis(N-butyl-N-(2,2,6,6-tetramethyl-4-piperidyl)amino)-s-triazine-6-ylamino]undecane, and 1,6,11-tris[2,4-bis(N-butyl-N-(1,2,2,6,6-pentamethyl-4-piperidyl)amino)-s-triazine-6-ylamino]undecane. The light stabilizer is added in an amount of preferably from 0.001 to 5 parts by weight based on 100 parts by weight of the polyvinyl chloride resin, and even more preferably from 0.05 to 3 parts by weight.

A method of processing the polyvinyl chloride resin composition of the present invention may include extrusion processing, calender processing, blow molding, press processing, powder molding, injection molding, and the like.
Examples

The present invention is described below by way of Examples further in detail. In Examples and Comparative Examples below, parts and % denote parts by weight and weight%, respectively, unless otherwise specified.

Example 1

(Production of Polyvinyl Chloride Resin)

PVA, having a degree of polymerization of 850 and having a degree of saponification of 72 mol%, of 0.54 parts (in an amount equivalent to 600 ppm with respect to vinyl chloride) was dissolved in 1300 parts of deionized water to prepare a dispersion stabilizer. The dispersion stabilizer thus obtained was charged in a 5 L glass-lined autoclave on which an antifouling agent, NOXOL WSW (produced by CIRS) was applied so as to have a solid content of 0.3 g/m$^2$ Subsequently, 1.5 parts of a 70% toluene solution of diisopropyl peroxydicarbonate was charged in the glass-lined autoclave, and after removing oxygen by degassing until the pressure in the autoclave becomes 0.0067 MPa, 900 parts of vinyl chloride was charged therein and the contents in the autoclave were raised in temperature to 57°C while being stirred to initiate polymerization. The pressure in the autoclave when initializing the polymerization was 0.83 MPa. After five hours since the initiation of polymerization, the polymerization is terminated at the time of the pressure in the autoclave being 0.70 MPa, and unreacted vinyl chloride was removed, followed by taking the polymerization reaction product out to dry it at 65°C overnight, and thus a polyvinyl chloride resin (PVC) was obtained.

(Production of PVA)

In a 6 L reaction vessel provided with a stirrer, a nitrogen inlet port, an additive inlet port, and an initiator addition port, 2450 parts of vinyl acetate and 1050 parts of methanol were charged and were raised in temperature to 60°C, followed by purging inside the system with nitrogen by nitrogen bubbling for 30 minutes. As a chain transfer agent, a 20% methanol solution of 2-mercapto ethanol (hereinafter referred to as 2-ME) was prepared and was purged with nitrogen by bubbling with a nitrogen gas. The temperature within the reaction vessel was adjusted to 60°C and 0.2 parts of 2-ME was added thereto, and then 1.2 parts of 2,2'-azobis(4-methoxy-2,4-dimethylvaleronitrile) was added to initiate polymerization. The polymerization temperature was maintained at 60°C during the polymerization, and the 20% methanol solution of 2-ME was continuously added at 5.0 mL/hr. It was cooled after four hours when the polymerization conversion reached 60% to terminate the polymerization. Subsequently, unreacted vinyl acetate was removed under reduced pressure to obtain a methanol solution of polyvinyl acetate (PVAc). A methanol solution of NaOH (10% concentration) was added for saponification to a PVAc solution adjusted to 30% so as to make the alkali molar ratio (mole number of NaOH/mole number of vinyl ester unit in PVAc) to become 0.006. The PVA thus obtained was washed with methanol. By way of the above operation, a PVA was obtained that has a degree of polymerization of 400 and has a degree of saponification of 80 mol%.

(Preparation of Mixed Powder (P))

The PVA obtained as above having a degree of polymerization of 400 and having a degree of saponification of 80 mol% was dissolved in distilled water to obtain 500 parts of a 5% aqueous solution. To this, 50 parts of zinc stearate (produced by NOF Corporation; trade name "Zinc Stearate") was added, and in addition as a wetting agent, 0.1 parts of an acetylene glycol-based surfactant (produced by Nissin Chemical Industry Co., Ltd.; trade name "Surfynol 465") was added and stirred, thereby obtaining a slurry. The slurry thus obtained was granulated with a spray dryer (manufactured by Ohkawara Kakohki Co., Ltd.; L-8 type spray dryer) to obtain a mixed powder (P). From the composition of the slurry, the solid ratio of PVA (A) / zinc compound (B) was 1/2. As the spray dried granules thus obtained were sieved through a 200 mesh screen (75 $\mu$m openings), 90% of them passed through the screen.

(Production of Polyvinyl Chloride Resin Composition)

In a porcelain beaker, 100 parts of polyvinyl chloride resin, 3 parts (1 part of PVA and 2 parts of zinc stearate) of the mixed powder (P) obtained as above, and 1 part of calcium stearate were respectively added and mixed to obtain a polyvinyl chloride resin composition.

(Thermal Stability Test)

The polyvinyl chloride resin composition was kneaded at 180°C for five minutes with a test roll to fabricate a sheet having a thickness of 0.45 mm. The sheet was cut into 50 x 70 mm. The sheet pieces were put into a gear oven, and the time period until they were completely blackened at a temperature of 180°C was measured to make it an index of the thermal stability. In addition, evaluation was made in a same manner other than modifying the test roll temperature to 190°C.

(Colorability Test)

The sheet obtained by being kneaded with a test roll at 190°C for five minutes was cut into 45 x 30 mm, and from 12 to 14 sheet pieces having a thickness of approximately 0.5 mm thus obtained were stacked and pressed at 185°C for five minutes to fabricate a test piece having a thickness of 5 mm, and the colorability was compared visually and determined in accordance with the following standards.

A: almost not colored
B: slightly colored
C: yellowed
D: yellow-browned

Examples 2 through 5

In a method same as Example 1 other than modifying the alkali molar ratio during saponification, a PVA shown in Table 1 was obtained. A polyvinyl chloride resin composition was obtained in a same manner as Example 1, and evaluation was made of the thermal stability and the colorability. Evaluation results are shown in Table 1.

Examples 6 and 7

In a method same as Example 1 other than modifying the weight of vinyl acetate and methanol to be charged and modifying the alkali molar ratio during saponification, a PVA shown in Table 1 was obtained. A polyvinyl chloride resin composition was obtained in a same manner as Example 1, and evaluation was made of the thermal stability and the colorability. Evaluation results are shown in Table 1.

Example 8

The PVA, having a degree of polymerization of 400 and having a degree of saponification of 80 mol%, obtained in Example 1 was ground to obtain a PVA powder (A) passing through a screen with 75 $\mu$m openings. By simply blending the powders (A) and (B) at a ratio of 1/2, a mixed powder (P) was prepared. Using the mixed powder (P), a polyvinyl chloride resin composition was obtained in a same manner as Example 1, and evaluation was made of the thermal stability and the colorability. Evaluation results are shown in Table 1.

Example 9

(Production of PVA)

In a 6 L reaction vessel provided with a stirrer, a nitrogen inlet port, an additive inlet port, and an initiator addition port, 2400 parts of vinyl acetate and 600 parts of methanol and 0.55 parts of n-dodecyl mercaptan (hereinafter referred to as n-DDM) were charged and were raised in temperature to 60°C, followed by purging inside the system with nitrogen by nitrogen bubbling for 30 minutes. The temperature within the reaction vessel was adjusted to 60°C, and then 1.2 parts of 2,2'-azobis(4-methoxy-2,4-dimethylvaleronitrile) was added to initiate polymerization. The polymerization temperature was maintained at 60°C during the polymerization, and 97.9 parts of the 10 weight% methyl acetate solution of n-DDM was added at a constant rate over five hours. It was cooled after five hours when the polymerization conversion reached 50% to terminate the polymerization. Subsequently, unreacted vinyl acetate was removed under reduced pressure to obtain a methanol solution of polyvinyl acetate (PVAc). A methanol solution of NaOH (10% concentration) was added for saponification to a PVAc solution adjusted to 30% so as to make the alkali molar ratio (mole number of NaOH/mole number of vinyl ester unit in PVAc) to become 0.008. By way of the above operation, a PVA was obtained that has a degree of saponification of 80.0 mol%. The sodium acetate content measured by isotachophoresis was 1.0%. The PVA was washed with methyl acetate containing a small amount of water under reflux and purified by soxhlet extraction with methanol for 48 hours, and then dissolved in heavy water for NMR analysis. Thus, the proton of the methyl group of the n-dodecyl group was found at $\sigma$ = 0.85 - 1.10 ppm and it was confirmed to be a PVA having a $CH_3$-$(CH_2)_{11}$-S group at one terminal of the molecules. The viscosity average degree of polymerization of the PVA was 400 that was measured in accordance with an ordinary method of JIS K6726.
Using the PVA, a polyvinyl chloride resin composition was obtained in a same manner as Example 1, and evaluation was made of the thermal stability and the colorability. Evaluation results are shown in Table 1.

Example 10

(Production of Ethylene-Modified PVA)

In a 100 L pressure reaction vessel provided with a stirrer, a nitrogen inlet port, an ethylene inlet port, and an initiator addition port, 26.4 kg of vinyl acetate and 33.5 kg of methanol were charged and were raised in temperature to 60°C, followed by purging inside the system with nitrogen by nitrogen bubbling for 30 minutes. Subsequently, ethylene was introduced so as to make the reaction vessel pressure to be 0.22 MPa. As an initiator, a 2.8 g/L methanol solution of 2,2'-azobis(4-methoxy-2,4-dimethylvaleronitrile) was prepared and was purged with nitrogen by bubbling with a nitrogen gas. After adjusting the temperature within the reaction vessel at 60°C, 77 mL of the initiator solution was poured thereto to initiate polymerization. During the polymerization, the reaction vessel pressure was maintained at 0.22 MPa by introducing ethylene and the polymerization temperature was maintained at 60°C, and the initiator solution was continuously added at 241 mL/hr. It was cooled after five hours when the polymerization conversion reached 60% to terminate the polymerization. After removing ethylene by opening the reaction vessel, a nitrogen gas was bubbled to completely deethylenize. Subsequently, the unreacted vinyl acetate monomer was removed under reduced pressure to obtain a methanol solution of an ethylene-polyvinyl acetate copolymer (ethylene-modified PVAc). A methanol solution of NaOH (10% concentration) was added for saponification to the solution adjusted to 30% so as to make the alkali molar ratio (mole number of NaOH/mole number of vinyl ester unit in modified PVAc) to become 0.009. The ethylene-modified PVA thus obtained had a degree of saponification of 80 mol%.

After three times of purification by reprecipitation, in which the methanol solution of ethylene-modified PVAc obtained by removing an unreacted vinyl acetate monomer after polymerization was put in n-hexane to precipitate ethylene-modified PVAc and the recovered ethylene-modified PVAc was dissolved with acetone, it was dried under reduced pressure at 60°C and a purified product of ethylene-modified PVAc was obtained. The ethylene unit content obtained from proton NMR measurement of the ethylene-modified PVAc was 5 mol%. A methanol solution of the ethylene-modified PVAc was saponified at an alkali molar ratio of 0.2, followed by soxhlet extraction with methanol for three days, and subsequently, it was dried to obtain a purified product of the ethylene-modified PVA. The viscosity average degree of polymerization of the ethylene-modified PVA was 400 that was measured in accordance with an ordinary method of JIS K6726.

Using the PVA, a polyvinyl chloride resin composition was obtained in a same manner as Example 1, and evaluation was made of the thermal stability and the colorability. Evaluation results are shown in Table 1.

Example 11

(Production of PVA)

In a 6 L reaction vessel provided with a stirrer, a nitrogen inlet port, an additive inlet port, and an initiator addition port, 2400 parts of vinyl acetate, 600 parts of methanol, and 0.29 parts of 3-mercapto propionic acid (hereinafter, referred to as 3-MPA) were charged and were raised in temperature to 60°C, followed by purging inside the system with nitrogen by nitrogen bubbling for 30 minutes. The temperature within the reaction vessel was adjusted to 60°C and 1.2 parts of 2,2'-azobis(4-methoxy-2,4-dimethylvaleronitrile) was added to initiate polymerization. The polymerization temperature was maintained at 60°C during the polymerization, and 51.7 parts of the 10% methanol solution of 3-MPA was added at a constant rate over five hours. It was cooled after five hours when the polymerization conversion reached 50% to terminate the polymerization. Subsequently, unreacted vinyl acetate was removed under reduced pressure to obtain a methanol solution of polyvinyl acetate (PVAc). A methanol solution of NaOH (10% concentration) was added for saponification to a PVAc solution adjusted to 30% so as to make the alkali molar ratio (mole number of NaOH/mole number of vinyl ester unit in PVAc) to become 0.008. By way of the above operation, a PVA was obtained that has a degree of saponification of 80.0 mol%. The sodium acetate content measured by isotachophoresis was 1.0%. The modified PVA was dissolved in heavy water for nuclear magnetic resonance analysis, and the presence of a carboxyl group (sodium carboxylate group) at one terminal of the molecules was confirmed. The viscosity average degree of polymerization of the PVA was 400 that was measured in accordance with an ordinary method of JIS K6726.

Using the PVA, a polyvinyl chloride resin composition was obtained in a same manner as Example 1, and evaluation was made of the thermal stability and the colorability. Evaluation results are shown in Table 1.

Example 12

Polyvinyl acetate (PVAc) obtained by polymerizing vinyl acetate in a same manner as Example 11 was prepared into a 30% methanol solution, and a methanol solution of NaOH (10% concentration) was added for saponification to this so as to make the alkali molar ratio (mole number of NaOH/mole number of vinyl ester unit in PVAc) to become 0.0025. By way of the above operation, a PVA was obtained that has a degree of saponification of 40.0 mol%. The sodium acetate content measured by isotachophoresis was 0.3%. The modified PVA was dissolved in heavy water for nuclear magnetic resonance analysis, and the presence of a carboxyl group (sodium carboxylate group) at one terminal of the molecules was confirmed. The viscosity average degree of polymerization of the PVA was 400 that was measured in accordance with an ordinary method of JIS K6726.

Using the PVA, a polyvinyl chloride resin composition was obtained in a same manner as Example 1, and evaluation was made of the thermal stability and the colorability. Evaluation results are shown in Table 1.

Example 13

(Production of PVA)

In a 6 L reaction vessel provided with a stirrer, a nitrogen inlet port, an additive inlet port, and an initiator addition port, 2400 parts of vinyl acetate, 600 parts of methanol, and 0.44 parts of 1-sodium mercaptopropane sulfonate were charged and were raised in temperature to 60°C, followed by purging inside the system with nitrogen by nitrogen bubbling for 30 minutes. The temperature within the reaction vessel was adjusted to 60°C and 1.2 parts of 2,2'-azobis(4-methoxy-2,4-dimethylvaleronitrile) was added to initiate polymerization. The polymerization temperature was maintained at 60°C during the polymerization, and 51.7 parts of the 15% methanol solution of 1-sodium mercaptopropane sulfonate was added at a constant rate over five hours. It was cooled after five hours when the polymerization conversion reached 50% to terminate the polymerization. Subsequently, unreacted vinyl acetate was removed under reduced pressure to obtain a methanol solution of polyvinyl acetate (PVAc). A methanol solution of NaOH (10% concentration) was added for saponification to a PVAc solution adjusted to 30% so as to make the alkali molar ratio (mole number of NaOH/mole number of vinyl ester unit in PVAc) to become 0.008. By way of the above operation, a PVA was obtained that has a degree of saponification of 80.0 mol%. The sodium acetate content measured by isotachophoresis was 1.0%. The modified PVA was dissolved in heavy water for nuclear magnetic resonance analysis, and the presence of a sulfonic acid group (sodium sulfonate group) at one terminal of the molecules was confirmed. The viscosity average degree of polymerization of the PVA was 400 that was measured in accordance with an ordinary method of JIS K6726. Using the PVA, a polyvinyl chloride resin composition was obtained in a same manner as Example 1, and evaluation was made of the thermal stability and the colorability. Evaluation results are shown in Table 1.

Examples 14 through 23

In a same manner as Examples 1 through 5 and 9 through 13 other than further adding and mixing 1 part of glycerin monostearate as a lubricant based on 100 parts of a vinyl chloride resin in the production of polyvinyl chloride resin composition in Examples 1 through 5 and 9 through 13, a polyvinyl chloride resin composition was obtained. Using the polyvinyl chloride resin composition thus obtained, evaluation was made of the thermal stability and the colorability. Evaluation results are shown in Table 1.

Example 24

The PVA used in Example 1 was dissolved in distilled water to obtain 167 parts of a 15% aqueous solution. To this, 50 parts of zinc stearate (produced by NOF Corporation; trade name "Zinc Stearate") was added, and in a same manner as Example 1 other than not adding a wetting agent, a mixed powder (P) was obtained. From the composition of the slurry, the solid ratio of PVA (A) / zinc compound (B) was 1/2. As the spray dried granules thus obtained were sieved through a 200 mesh screen (75 μm openings), 83% of them passed through the screen. Using the mixed powder (P), a polyvinyl chloride resin composition was obtained in a same manner as Example 1, and evaluation was made of the thermal stability and the colorability. Evaluation results are shown in Table 1.

Example 25

In a same manner as Example 24 other than further adding and mixing 1 part of glycerin monostearate as a lubricant based on 100 parts of a vinyl chloride resin in the production of polyvinyl chloride resin composition in Example 24, a polyvinyl chloride resin composition was obtained. Using the polyvinyl chloride resin composition thus obtained, evaluation was made of the thermal stability and the colorability. Evaluation results are shown in Table 1.

Comparable Example 1

In a same manner as Example 1 other than adding 2 parts of zinc stearate passing through 75 μm openings instead of the mixed powder (P) in the production of polyvinyl chloride resin composition, a polyvinyl chloride resin composition was obtained, and evaluation was made of the thermal stability and the colorability. Evaluation results are shown in Table 1.

Comparable Example 2

In a same manner as Comparable Example 1 other than further adding and mixing 1 part of glycerin monostearate as a lubricant based on 100 parts of a vinyl chloride resin in the production of polyvinyl chloride resin composition in Comparable Example 1, a polyvinyl chloride resin composition was obtained. Using the polyvinyl chloride resin composition thus obtained, evaluation was made of the thermal stability and the colorability. Evaluation results are shown in Table 1.

Comparable Example 3

In a method same as Example 1 other than modifying the weight of vinyl acetate and methanol to be charged and modifying the alkali molar ratio during saponification, a PVA shown in Table 1 was obtained. Using the PVA, a polyvinyl chloride resin composition was obtained in a same manner as Example 1, and evaluation was made of the thermal stability and the colorability. Evaluation results are shown in Table 1.

Comparable Example 4

In a method same as Example 1 other than modifying the weight of vinyl acetate and methanol to be charged and modifying the alkali molar ratio during saponification, a PVA shown in Table 1 was obtained. Using the PVA, a polyvinyl chloride resin composition was obtained in a same manner as Example 8, and evaluation was made of the thermal stability and the colorability. Evaluation results are shown in Table 1.

Comparable Example 5

In a manner same as Example 8 other than omitting the grounding of PVA, a mixed powder (P) was obtained. Using the mixed powder (P), a polyvinyl chloride resin composition was obtained in a same manner as Example 1, and evaluation was made of the thermal stability and the colorability. Evaluation results are shown in Table 1.

Comparable Examples 6 through 8

In a same manner as Comparable Examples 3 through 5 other than further adding and mixing 1 part of glycerin monostearate as a lubricant based on 100 parts of a vinyl chloride resin in the production of polyvinyl chloride resin composition in Comparable Examples 3 through 5, a polyvinyl chloride resin composition was obtained. Using the polyvinyl chloride resin composition thus obtained, evaluation was made of the thermal stability and the colorability. Evaluation results are shown in Table 1.

Comparable Example 9

In a manner same as Example 8 other than making the mixing ratio of powders (A) and (B) to 0.001/2, a mixed powder (P) was obtained. Using the mixed powder (P), a polyvinyl chloride resin composition was obtained in a same manner as Example 1, and evaluation was made of the thermal stability and the colorability. Evaluation results are shown in Table 1.

Comparable Examples 10 through 12

In a manner same as Example 1 other than adjusting the mixing ratio of the aqueous PVA solution and the zinc stearate so as to make the solid ratio of (A) and (B) to be a ratio shown in Table 1, a mixed powder (P) was obtained. Using the mixed powder (P), a polyvinyl chloride resin composition was obtained in a same manner as Example 1, and evaluation was made of the thermal stability and the colorability. Evaluation results are shown in Table 1.

Comparable Example 13

The PVA used in Example 1 was dissolved in distilled water to obtain 100 parts of a 25% aqueous solution. To this, 50 parts of zinc stearate (produced by NOF Corporation; trade name "Zinc Stearate") was added, and in a same manner as Example 1 other than not adding a wetting agent, a mixed powder (P) was obtained. From the composition of the slurry, the solid ratio of PVA (A) / zinc compound (B) was 1/2. As the spray dried granules thus obtained were sieved through a 200 mesh screen (75 μm openings), 75% of them passed through the screen. Using the mixed powder (P), a polyvinyl chloride resin composition was obtained in a same manner as Example 1, and evaluation was made of the thermal stability and the colorability. Evaluation results are shown in Table 1.

Comparable Example 14

In a same manner as Example 13 other than further adding and mixing 1 part of glycerin monostearate as a lubricant based on 100 parts of a vinyl chloride resin in the production of polyvinyl chloride resin composition in Comparable Example 13, a polyvinyl chloride resin composition was obtained. Using the polyvinyl chloride resin composition thus obtained, evaluation was made of the thermal stability and the colorability. Evaluation results are shown in Table 1.
Table 1

| | PVA (A) Degree of Polymerization | PVA (A) Degree of Saponification (mol%) | Modified Type and Modified Site | Composition Ratio (parts/PVC 100 parts) PVA (A) | Composition Ratio (parts/PVC 100 parts) Zinc Stearate (B) | Mixed Powder (P) Passing through 75 μm Screen (weight%) | Glycerin Monostearate (parts/PVC 100 parts) | Blackening Time Period 1) (min.) | Blackening Time Period 2) (min.) | Colorability |
|---|---|---|---|---|---|---|---|---|---|---|
| Example 1 | 400 | 80 | none | 1 | 2 | 90 | 0 | 100 | 90 | A |
| Example 2 | 400 | 88 | none | 1 | 2 | 91 | 0 | 90 | 100 | A |
| Example 3 | 400 | 72 | none | 1 | 2 | 92 | 0 | 100 | 75 | A |
| Example 4 | 400 | 96 | none | 1 | 2 | 90 | 0 | 75 | 90 | A |
| Example 5 | 400 | 68 | none | 1 | 2 | 89 | 0 | 90 | 75 | A |
| Example 6 | 750 | 80 | none | 1 | 2 | 86 | 0 | 90 | 75 | A |
| Example 7 | 950 | 80 | none | 1 | 2 | 88 | 0 | 75 | 75 | A |
| Example 8 | 400 | 80 | none | 1 a) | 2 a) | 99 or more | 0 | 75 | 60 | A |
| Example 9 | 400 | 80 | terminal $C_{12}H_{25}$ | 1 | 2 | 92 | 0 | 110 | 100 | A |
| Example 10 | 400 | 80 | ethylene copolymer | 1 | 2 | 93 | 0 | 110 | 90 | A |
| Example 11 | 400 | 80 | terminal COONa | 1 | 2 | 88 | 0 | 110 | 90 | A |
| Example 12 | 400 | 40 | terminal COONa | 1 | 2 | 86 | 0 | 90 | 75 | B |
| Example 13 | 400 | 80 | terminal $SO_3Na$ | 1 | 2 | 87 | 0 | 110 | 90 | A |
| Example 14 | 400 | 80 | none | 1 | 2 | 90 | 1 | 120 | 105 | A |
| Example 15 | 400 | 88 | none | 1 | 2 | 91 | 1 | 100 | 120 | A |
| Example 16 | 400 | 72 | none | 1 | 2 | 92 | 1 | 105 | 90 | A |

| | PVA (A) | | | Mixed Powder (P) | | | | Evaluation Conditions and Results | | |
|---|---|---|---|---|---|---|---|---|---|---|
| | Degree of Polymerization | Degree of Saponification (mol%) | Modified Type and Modified Site | Composition Ratio (parts/PVC 100 parts) | | Passing through 75 $\mu$m Screen (weight%) | Glycerin Monostearate (parts/PVC 100 parts) | Blackening Time Period [1] (min.) | Blackening Time Period [2] (min.) | Colorability |
| | | | | PVA (A) | Zinc Stearate (B) | | | | | |
| Example 17 | 400 | 96 | none | 1 | 2 | 90 | 1 | 90 | 100 | A |
| Example 18 | 400 | 68 | none | 1 | 2 | 89 | 1 | 75 | 100 | A |
| Example 19 | 400 | 80 | terminal $C_{12}H_{25}$ | 1 | 2 | 92 | 1 | 120 | 110 | A |
| Example 20 | 400 | 80 | ethylene copolymer [c] | 1 | 2 | 93 | 1 | 120 | 100 | A |
| Example 21 | 400 | 80 | terminal COONa | 1 | 2 | 88 | 1 | 120 | 90 | A |
| Example 22 | 400 | 40 | terminal COONa | 1 | 2 | 86 | 1 | 100 | 75 | B |
| Example 23 | 400 | 80 | terminal $SO_3Na$ | 1 | 2 | 87 | 1 | 110 | 90 | A |
| Example 24 | 400 | 80 | none | 1 | 2 | 83 | 0 | 90 | 75 | B |
| Example 25 | 400 | 80 | none | 1 | 2 | 83 | 1 | 105 | 90 | B |
| Comparable Example 1 | none | none | none | none | 2 [b] | 99 or more | 0 | 15 | 15 | D |
| Comparable Example 2 | none | none | none | none | 2 [b] | 99 or more | 1 | 15 | 15 | D |
| Comparable Example 3 | 1500 | 80 | none | 1 | 2 | 92 | 0 | 45 | 45 | B |
| Comparable Example 4 | 400 | 25 | none | 1 [a] | 2 [a] | 99 or more | 0 | 45 | 45 | C |

(continued)

| | PVA (A) | | | Mixed Powder (P) | | | Glycerin Monostearate (parts/PVC 100 parts) | Evaluation Conditions and Results | | |
|---|---|---|---|---|---|---|---|---|---|---|
| | Degree of Polymerization | Degree of Saponification (mol%) | Modified Type and Modified Site | Composition Ratio (parts/PVC 100 parts) | | Passing through 75 μm Screen (weight%) | | Blackening Time Period [1] (min.) | Blackening Time Period [2] (min.) | Colorability |
| | | | | PVA (A) | Zinc Stearate (B) | | | | | |
| Comparable Example 5 | 400 | 80 | none | 1[a] | 2[a] | 70 | 0 | 60 | 45 | B |
| Comparable Example 6 | 1500 | 80 | none | 1 | 2 | 92 | 1 | 60 | 60 | B |
| Comparable Example 7 | 400 | 25 | none | 1[a] | 2[a] | 99 or more | 1 | 45 | 45 | C |
| Comparable Example 8 | 400 | 80 | none | 1[a] | 2[a] | 70 | 1 | 75 | 60 | B |
| Comparable Example 9 | 400 | 80 | none | 0.001[a] | 2[a] | 99 or more | 0 | 15 | 15 | D |
| Comparable Example 10 | 400 | 80 | none | 15 | 1 | 86 | 0 | 120 | 120 | D |
| Comparable Example 11 | 400 | 80 | none | 1 | 0.002 | 83 | 0 | -* | -* | -* |
| Comparable Example 12 | 400 | 80 | none | 1 | 15 | 90 | 0 | 30 | 30 | D |
| Comparable Example 13 | 400 | 80 | none | 1 | 2 | 75 | 0 | 60 | 60 | B |

| | PVA (A) | | | Mixed Powder (P) | | | Glycerin Monostearate (parts/PVC 100 parts) | Evaluation Conditions and Results | | |
|---|---|---|---|---|---|---|---|---|---|---|
| | Degree of Polymerization | Degree of Saponification (mol%) | Modified Type and Modified Site | Composition Ratio (parts/PVC 100 parts) | | Passing through 75 μm Screen (weight%) | | Blackening Time Period [1] (min.) | Blackening Time Period [2] (min.) | Colorability |
| | | | | PVA (A) | Zinc Stearate (B) | | | | | |
| Comparable Example 14 | 400 | 80 | none | 1 | 2 | 75 | 1 | 75 | 60 | B |

a) Not using spray dried particles, a simple mixed powder of PVA powder (A) and zinc-based compound (B) was used.
b) Not using spray dried particles, only zinc compound (B) was used.
c) Ethylene modified amount: 5 mol%
1) Roll kneading temperature at 180°C
2) Roll kneading temperature at 190°C
* Seriously colored during roll kneading

Examples 1 through 5 show the cases of using a mixed powder of a PVA having a degree of saponification within a range from 60 to 99.9 mol% and having a viscosity average degree of polymerization of 400 in the form of spray dried granules with zinc stearate, 80 weight% or more of them passing through 75 $\mu$m openings. Overall, the results were good, and the blackening time period was longer than Examples 6 through 8 described later. In particular, Examples 1 through 3 having a degree of saponification within a range from 70 to 93 mol% were particularly excellent in the blackening time period at a kneading temperature with a test roll of either 180°C or 190°C.

Examples 6 and 7 show the cases of a degree of saponification of 80 mol% and a viscosity average degree of polymerization of 750 and 950. Overall, the results were good.

Example 8 shows the case of blending a simple blended product of a PVA powder and a stearic acid powder both passing through 75 $\mu$m openings that were not spray dried granules of PVA and zinc stearate although having composition same as Example 1. The results were good.

Example 9 is the case of using a PVA containing an alkyl group at a terminal that had the other composition same as Example 1. Both 180°C and 190°C were more excellent, although slightly, in the blackening time period than Example 1.

Example 10 is the case of using a PVA obtained by copolymerizing ethylene that had the other composition same as Example 1. It was more excellent in the blackening time period than Example 1.

Example 11 is the case of using a PVA containing a carboxyl group at a terminal that had the other composition same as Example 1. It was more excellent in the blackening time period than Example 1. Compared with Example 12 described later, it was excellent in both the blackening time period and the colorability.

Example 12 is the case of using a PVA containing a carboxyl group at a terminal similar to Example 11, while the PVA had a degree of saponification of 40 mol%, lower than Example 11. Overall, the results were acceptable.

Example 13 is the case of using a PVA containing a sulfonic acid group at a terminal that had the other composition same as Example 1. It was more excellent in the blackening time period than Example 1.

In Examples 14 through 18, glycerin monostearate was blended as a lubricant into the composition of Examples 1 through 5. Any of the cases had an improved blackening time period and was also excellent in the colorability.

In Examples 19 through 23, glycerin monostearate was blended as a lubricant into the composition of Examples 9 through 13. Any of the cases had an improved blackening time period.

In contrast, Comparable Examples 1 and 2 show the results in a case of not using PVA together. Either case had an unsatisfactory level of the blackening time period and also had a low level of the colorability. It was similar even in a case of blending glycerin monostearate as a lubricant (Comparable Example 2).

Comparable Examples 3 and 4 show cases of a viscosity average degree of polymerization exceeding (1500) the range of the present invention and of a degree of saponification beyond (25 mol%) the range of the present invention, respectively. Since the PVA having a degree of saponification of 25 mol% was poor in water solubility, the PVA was forcibly ground and evaluation was made of a product of blending a simple blended product of a PVA powder and a stearic acid powder, both PVA and zinc stearate passing through 75 $\mu$m openings. Either Comparable Example 3 or 4 had an unsatisfactory level of the blackening time period also had a low level of the colorability.

Further, Comparable Example 5 is a case of adding, not spray dried granules of PVA and zinc stearate similar to Example 8, a mixed powder of both powders simply blended therein while as a result of using not particularly micronized PVA, it used a mixed powder only 70 weight% of which passed through a screen with 75 $\mu$m openings. Compared with Example 8, the blackening time period was reduced and the colorability also decreased.

In Comparable Examples 6 through 8, glycerin monostearate was blinded as a lubricant into the composition of Comparable Examples 3 through 5. In any of the cases, the blackening time period was unsatisfactory although slightly improved, and the colorability was also at a low level.

Further, a case of an extremely low amount of added PVA (Comparable Example 9) and, on the contrary, a case of an extremely high amount of added PVA (Comparable Example 10) were not satisfactory in both the blackening time period and the colorability, and the colorability seriously decreased.

In a case of an extremely low amount of added zinc compound (Comparable Example 11), the resin was degraded during roll kneading and not enough for evaluation. On the contrary, a case of an extremely high amount of added zinc compound (Comparable Example 12) was not satisfactory in both the blackening time period and the colorability.

In comparison of the amounts of the mixed powder (P) passing through a 75 $\mu$m screen among identical composition, those having 80 weight% or more (Examples 1 and 24) in the range defined by the present invention had a satisfactory level of both the blackening time period and the colorability, and those having a lubricant added to them (Examples 14 and 25) had a further improved performance. In contrast, any of those having less than 80 weight% (Comparable Examples 5 and 13) and those having a lubricant added to them (Comparable Examples 8 and 14) were not satisfactory in both the blackening time period and the colorability.

Example 26

(Preparation of Mixed Powder (P))

The PVA obtained in a same manner as Example 1 was dissolved in distilled water to obtain 500 parts of a 5% aqueous solution. To this, 50 parts of zinc stearate (produced by NOF Corporation; trade name "Zinc Stearate") and 25 parts of calcium stearate (produced by NOF Corporation; trade name "Calcium Stearate") were added, and in addition as a wetting agent, 0.1 parts of an acetylene glycol-based surfactant (produced by Nissin Chemical Industry Co., Ltd.; trade name "Surfynol 465") was added and stirred, thereby obtaining a slurry. The slurry thus obtained was granulated with a spray dryer (manufactured by Ohkawara Kakohki Co., Ltd.; L-8 type spray dryer) to obtain a mixed powder (P). From the composition of the slurry, the solid ratio of PVA (A) / zinc compound (B) / calcium compound (C) was 1/2/1, and the solid ratio of A/(B + C) was 1/3. As the spray dried granules thus obtained were sieved through a 200 mesh screen (75 $\mu$m openings), 90% of them passed through the screen.

(Production of Polyvinyl Chloride Resin Composition)

In a porcelain beaker, 100 parts of polyvinyl chloride resin obtained in a same manner as Example 1 and 4 parts (1 part of PVA, 2 parts of zinc stearate, and 1 part of calcium stearate) of the mixed powder (P) obtained as above, were added and mixed to obtain a polyvinyl chloride resin composition. Using the polyvinyl chloride resin composition thus obtained, evaluation was made of the thermal stability and the colorability in a same manner as Example 1. Evaluation results are shown in Table 2.

Examples 27 through 30

In a method same as Example 1 other than modifying the alkali molar ratio during saponification, a PVA shown in Table 2 was obtained. Using the PVA, a polyvinyl chloride resin composition was obtained in a same manner as Example 26, and evaluation was made of the thermal stability and the colorability. Evaluation results are shown in Table 2.

Examples 31 and 32

In a method same as Example 1 other than modifying the weight of vinyl acetate and methanol to be charged and modifying the alkali molar ratio during saponification, a PVA shown in Table 2 was obtained. A polyvinyl chloride resin composition was obtained in a same manner as Example 26, and evaluation was made of the thermal stability and the colorability. Evaluation results are shown in Table 2.

Example 33

The PVA, having a degree of polymerization of 400 and having a degree of saponification of 80 mol%, obtained in a same manner as Example 1 was ground to obtain a PVA powder (A) passing through a screen with 75 $\mu$m openings. By simply blending each of the powders (A), (B), and (C) at a ratio of 1/2/1 (A/(B + C) = 1/3), a mixed powder (P) was prepared. Using the mixed powder (P), a polyvinyl chloride resin composition was obtained in a same manner as Example 26, and evaluation was made of the thermal stability and the colorability. Evaluation results are shown in Table 2.

Example 34

Using the PVA, having a $CH_3$-$(CH_2)_{11}$-S group at one terminal of the molecules, obtained in a same manner as Example 9, a polyvinyl chloride resin composition was obtained in a same manner as Example 26, and evaluation was made of the thermal stability and the colorability. Evaluation results are shown in Table 2.

Example 35

Using the ethylene-modified PVA obtained in a same manner as Example 10, a polyvinyl chloride resin composition was obtained in a same manner as Example 26, and evaluation was made of the thermal stability and the colorability. Evaluation results are shown in Table 2.

Example 36

Using the PVA, having a carboxyl group (sodium carboxylate group) at one terminal in the molecules, obtained in a same manner as Example 11, a polyvinyl chloride resin composition was obtained in a same manner as Example 26, and evaluation was made of the thermal stability and the colorability. Evaluation results are shown in Table 2.

Example 37

Using the PVA, having a carboxyl group (sodium carboxylate group) at one terminal in the molecules, obtained in a same manner as Example 12, a polyvinyl chloride resin composition was obtained in a same manner as Example 26, and evaluation was made of the thermal stability and the colorability. Evaluation results are shown in Table 2.

Example 38

Using the PVA, having a sulfonic acid group (sodium sulfonate group) at one terminal in the molecules, obtained in a same manner as Example 13, a polyvinyl chloride resin composition was obtained in a same manner as Example 26, and evaluation was made of the thermal stability and the colorability. Evaluation results are shown in Table 2.

Examples 39 through 48

In a same manner as Examples 26 through 30 and 34 through 38 other than further adding and mixing 1 part of glycerin monostearate as a lubricant based on 100 parts of a vinyl chloride resin in the production of polyvinyl chloride resin composition in Examples 26 through 30 and 34 through 38, a polyvinyl chloride resin composition was obtained. Using the polyvinyl chloride resin composition thus obtained, evaluation was made of the thermal stability and the colorability. Evaluation results are shown in Table 2.

Example 49

The PVA obtained in a same manner as Example 1 was dissolved in distilled water to obtain 167 parts of a 15% aqueous solution. To this, 50 parts of zinc stearate (produced by NOF Corporation; trade name "Zinc Stearate") and 25 parts of calcium stearate (produced by NOF Corporation; trade name "Calcium Stearate") were added, and in a same manner as Example 26 other than not adding a wetting agent, a mixed powder (P) was obtained. From the composition of the slurry, the solid ratio of PVA (A) / zinc compound (B) / calcium compound (C) was 1/2/1, and the solid ratio of A/(B + C) was 1/3. As the spray dried granules thus obtained were sieved through a 200 mesh screen (75 $\mu$m openings), 83% of them passed through the screen.
Using the mixed powder (P), a polyvinyl chloride resin composition was obtained in a same manner as Example 26, and evaluation was made of the thermal stability and the colorability. Evaluation results are shown in Table 2.

Example 50

In a same manner as Example 49 other than further adding and mixing 1 part of glycerin monostearate as a lubricant based on 100 parts of a vinyl chloride resin in the production of polyvinyl chloride resin composition in Example 49, a polyvinyl chloride resin composition was obtained. Using the polyvinyl chloride resin composition thus obtained, evaluation was made of the thermal stability and the colorability. Evaluation results are shown in Table 2.

Comparable Example 15

In a same manner as Example 26 other than adding 2 parts of zinc stearate passing through a screen with 75 $\mu$m openings and 1 part of calcium stearate passing through a screen with 75 $\mu$m openings instead of the mixed powder (P) in the production of polyvinyl chloride resin composition, a polyvinyl chloride resin composition was obtained, and evaluation was made of the thermal stability and the colorability. Evaluation results are shown in Table 2.

Comparable Example 16

In a same manner as Comparable Example 15 other than further adding and mixing 1 part of glycerin monostearate as a lubricant based on 100 parts of a vinyl chloride resin in the production of polyvinyl chloride resin composition in Comparable Example 15, a polyvinyl chloride resin composition was obtained. Using the polyvinyl chloride resin composition thus obtained, evaluation was made of the thermal stability and the colorability. Evaluation results are shown in Table 2.

Comparable Example 17

In a method same as Example 1 other than modifying the weight of vinyl acetate and methanol to be charged and modifying the alkali molar ratio during saponification, a PVA shown in Table 2 was obtained. Using the PVA, a polyvinyl chloride resin composition was obtained in a same manner as Example 26, and evaluation was made of the thermal stability and the colorability. Evaluation results are shown in Table 2.

Comparable Example 18

In a method same as Example 1 other than modifying the alkali molar ratio during saponification, a PVA shown in Table 2 was obtained. Using the PVA, a polyvinyl chloride resin composition was obtained in a same manner as Example 33, and evaluation was made of the thermal stability and the colorability. Evaluation results are shown in Table 2.

Comparable Example 19

In a manner same as Example 33 other than omitting the grounding of PVA, a mixed powder (P) was obtained. Using the mixed powder (P), a polyvinyl chloride resin composition was obtained in a same manner as Example 26, and evaluation was made of the thermal stability and the colorability. Evaluation results are shown in Table 2.

Comparable Examples 20 through 22

In a same manner as Comparable Examples 17 through 19 other than further adding and mixing 1 part of glycerin monostearate as a lubricant based on 100 parts of a vinyl chloride resin in the production of polyvinyl chloride resin composition in Comparable Examples 17 through 19, a polyvinyl chloride resin composition was obtained. Using the polyvinyl chloride resin composition thus obtained, evaluation was made of the thermal stability and the colorability. Evaluation results are shown in Table 2.

Comparable Example 23

In a manner same as Example 33 other than making the mixing ratio of powders (A), (B), and (C) to 0.001/2/1 (A/(B + C) = 0.001/3), a mixed powder (P) was obtained. Using the mixed powder (P), a polyvinyl chloride resin composition was obtained in a same manner as Example 26, and evaluation was made of the thermal stability and the colorability. Evaluation results are shown in Table 2.

Comparable Examples 24 through 26

In a manner same as Example 26 other than adjusting the mixing ratio of the aqueous PVA solution, the zinc stearate, and the calcium stearate so as to make the solid ratio of (A), (B), and (C) to be a ratio shown in Table 2, a mixed powder (P) was obtained. Using the mixed powder (P), a polyvinyl chloride resin composition was obtained in a same manner as Example 26, and evaluation was made of the thermal stability and the colorability. Evaluation results are shown in Table 2.

Comparable Example 27

The PVA obtained in a same manner as Example 1 was dissolved in distilled water to obtain 100 parts of a 25% aqueous solution. To this, 50 parts of zinc stearate (produced by NOF Corporation; trade name "Zinc Stearate") and 25 parts of calcium stearate (produced by NOF Corporation; trade name "Calcium Stearate") were added, and in a same manner as Example 26 other than not adding a wetting agent, a mixed powder (P) was obtained. From the composition of the slurry, the solid ratio of PVA (A) /zinc compound (B) / calcium compound (C) was 1/2/1, and the solid ratio of A/(B + C) was 1/3. As the spray dried granules thus obtained were sieved through a 200 mesh screen (75 $\mu$m openings), 75% of them passed through the screen.
Using the mixed powder (P), a polyvinyl chloride resin composition was obtained in a same manner as Example 26, and evaluation was made of the thermal stability and the colorability. Evaluation results are shown in Table 2.

Comparable Example 28

In a same manner as Comparable Example 27 other than further adding and mixing 1 part of glycerin monostearate as a lubricant based on 100 parts of a vinyl chloride resin in the production of polyvinyl chloride resin composition in Comparable Example 27, a polyvinyl chloride resin composition was obtained. Using the polyvinyl chloride resin composition thus obtained, evaluation was made of the thermal stability and the colorability. Evaluation results are shown in Table 2.

Table 2

| | PVA (A) | | | Mixed Powder (P) | | | | Glycerin Monostearate (parts/PVC 100 parts) | Evaluation Conditions and Results | | |
|---|---|---|---|---|---|---|---|---|---|---|---|
| | Degree of Polymerization | Degree of Saponification (mol%) | Modified Type and Modified Site | Composition Ratio (parts/PVC 100 parts) | | | Passing through 75 $\mu$m Screen (weight%) | | Blackening Time Period [1] (min.) | Blackening Time Period [2] (min.) | Colorability |
| | | | | PVA (A) | Zinc Stearate (B) | Calcium Stearate (C) | | | | | |
| Example 26 | 400 | 80 | none | 1 | 2 | 1 | 90 | 0 | 120 | 105 | A |
| Example 27 | 400 | 88 | none | 1 | 2 | 1 | 91 | 0 | 105 | 120 | A |
| Example 28 | 400 | 72 | none | 1 | 2 | 1 | 92 | 0 | 120 | 90 | A |
| Example 29 | 400 | 96 | none | 1 | 2 | 1 | 90 | 0 | 90 | 105 | A |
| Example 30 | 400 | 68 | none | 1 | 2 | 1 | 89 | 0 | 105 | 90 | A |
| Example 31 | 750 | 80 | none | 1 | 2 | 1 | 86 | 0 | 105 | 90 | A |
| Example 32 | 950 | 80 | none | 1 | 2 | 1 | 88 | 0 | 90 | 90 | A |
| Example 33 | 400 | 80 | none | 1[a] | 2[a] | 1[a] | 99 or more | 0 | 90 | 75 | A |
| Example 34 | 400 | 80 | terminal $C_{12}H_{25}$ | 1 | 2 | 1 | 92 | 0 | 135 | 120 | A |
| Example 35 | 400 | 80 | ethylene copolymer [c] | 1 | 2 | 1 | 93 | 0 | 135 | 105 | A |
| Example 36 | 400 | 80 | terminal COONa | 1 | 2 | 1 | 88 | 0 | 135 | 105 | A |
| Example 37 | 400 | 40 | terminal COONa | 1 | 2 | 1 | 86 | 0 | 105 | 90 | B |
| Example 38 | 400 | 80 | terminal $SO_3Na$ | 1 | 2 | 1 | 87 | 0 | 135 | 105 | A |
| Example 39 | 400 | 80 | none | 1 | 2 | 1 | 90 | 1 | 135 | 120 | A |
| Example 40 | 400 | 88 | none | 1 | 2 | 1 | 91 | 1 | 120 | 135 | A |

EP 2 532 708 A1

| | PVA (A) | | | Mixed Powder (P) | | | Passing through 75 μm Screen | Glycerin Monostearate (parts/PVC 100 parts) | Evaluation Conditions and Results | | |
|---|---|---|---|---|---|---|---|---|---|---|---|
| | Degree of Polymerization | Degree of Saponification | Modified Type and Modified Site | Composition Ratio (parts/PVC 100 parts) | | | | | Blackening Time Period [1] | Blackening Time Period [2] | Colorability |
| | | (mol%) | | PVA (A) | Zinc Stearate (B) | Calcium Stearate (C) | (weight%) | | (min.) | (min.) | |
| Example 41 | 400 | 72 | none | 1 | 2 | 1 | 92 | 1 | 120 | 105 | A |
| Example 42 | 400 | 96 | none | 1 | 2 | 1 | 90 | 1 | 105 | 120 | A |
| Example 43 | 400 | 68 | none | 1 | 2 | 1 | 89 | 1 | 90 | 120 | A |
| Example 44 | 400 | 80 | terminal $C_{12}H_{25}$ | 1 | 2 | 1 | 92 | 1 | 135 | 120 | A |
| Example 45 | 400 | 80 | ethylene copolymer [c] | 1 | 2 | 1 | 93 | 1 | 135 | 120 | A |
| Example 46 | 400 | 80 | terminal COONa | 1 | 2 | 1 | 88 | 1 | 135 | 105 | A |
| Example 47 | 400 | 40 | terminal COONa | 1 | 2 | 1 | 86 | 1 | 120 | 90 | B |
| Example 48 | 400 | 80 | terminal $SO_3Na$ | 1 | 2 | 1 | 87 | 1 | 135 | 105 | A |
| Example 49 | 400 | 80 | none | 1 | 2 | 1 | 83 | 0 | 105 | 90 | B |
| Example 50 | 400 | 80 | none | 1 | 2 | 1 | 83 | 1 | 120 | 105 | B |
| Comparable Example 15 | none | none | none | none | 2 [b] | 1 [b] | 99 or more | 0 | 15 | 15 | D |
| Comparable Example 16 | none | none | none | none | 2 [b] | 1 [b] | 99 or more | 1 | 15 | 15 | D |
| Comparable Example 17 | 1500 | 80 | none | 1 | 2 | 1 | 92 | 0 | 60 | 60 | B |

EP 2 532 708 A1

| | PVA (A) | | | Mixed Powder (P) | | | | Glycerin Monostearate (parts/PVC 100 parts) | Evaluation Conditions and Results | | |
| | Degree of Polymerization | Degree of Saponification (mol%) | Modified Type and Modified Site | Composition Ratio (parts/PVC 100 parts) | | | Passing through 75 μm Screen (weight%) | | Blackening Time Period [1] (min.) | Blackening Time Period [2] (min.) | Colorability |
| | | | | PVA (A) | Zinc Stearate (B) | Calcium Stearate (C) | | | | | |
|---|---|---|---|---|---|---|---|---|---|---|---|
| Comparable Example 18 | 400 | 25 | none | 1[a] | 2[a] | 1[a] | 99 or more | 0 | 413 | 45 | C |
| Comparable Example 19 | 400 | 80 | none | 1[a] | 2[a] | 1[a] | 75 | 0 | 60 | 45 | B |
| Comparable Example 20 | 1500 | 80 | none | 1 | 2 | 1 | 92 | 1 | 75 | 75 | B |
| Comparable Example 21 | 400 | 25 | none | 1[a] | 2[a] | 1[a] | 99 or more | 1 | 45 | 45 | C |
| Comparable Example 22 | 400 | 80 | none | 1[a] | 2[a] | 1[a] | 75 | 1 | 75 | 60 | B |
| Comparable Example 23 | 400 | 80 | none | 0.001[a] | 2[a] | 1[a] | 99 or more | 0 | 15 | 15 | D |
| Comparable Example 24 | 400 | 80 | none | 15 | 1 | 1 | 86 | 0 | 120 | 120 | D |
| Comparable Example 25 | 400 | 80 | none | 1 | 0.002 | 0.001 | 83 | 0 | -* | -* | -* |
| Comparable Example 26 | 400 | 80 | none | 1 | 15 | 75 | 90 | 0 | 30 | 30 | D |
| Comparable Example 27 | 400 | 80 | none | 1 | 2 | 1 | 75 | 0 | 75 | 75 | B |

(continued)

| | PVA (A) | | | Mixed Powder (P) | | | | | Evaluation Conditions and Results | | |
|---|---|---|---|---|---|---|---|---|---|---|---|
| | Degree of Polymerization | Degree of Saponification<br><br>(mol%) | Modified Type and Modified Site | Composition Ratio (parts/PVC 100 parts) | | | Passing through 75 $\mu$m Screen | Glycerin Monostearate (parts/PVC 100 parts) | Blackening Time Period [1]<br><br>(min.) | Blackening Time Period [2]<br><br>(min.) | Colorability |
| | | | | PVA (A) | Zinc Stearate (B) | Calcium Stearate (C) | (weight%) | | | | |
| Comparable Example 28 | 400 | 80 | none | 1 | 2 | 1 | 75 | 1 | 90 | 75 | B |

a) Not using spray dried particles, a simple mixed powder of PVA powder (A), zinc compound (B), and calcium compound (C) was used.
b) Not using spray dried particles, zinc compound (B) and calcium compound (C) were used.
c) Ethylene modified amount: 5 mol%
1) Roll kneading temperature at 180°C
2) Roll kneadmg temperature at 190°C
* Seriously colored during roll kneading

Examples 26 through 30 show the cases of using a mixed powder of a PVA having a degree of saponification within a range from 60 to 99.9 mol% and having a viscosity average degree of polymerization of 400 in the form of spray dried granules with zinc stearate and calcium stearate, 80 weight% or more of them passing through 75 μm openings. Overall, the results were good, and the blackening time period was longer than Examples 31 through 33 described later. In particular, Examples 26 through 28 having a degree of saponification within a range from 70 to 93 mol% were particularly excellent in the blackening time period at a kneading temperature with a test roll of either 180°C or 190°C.

Examples 31 and 32 show the cases of a degree of saponification of 80 mol% and a viscosity average degree of polymerization of 750 and 950. Overall, the results were good.

Example 33 shows the case of blending a simple blended product of a PVA powder, zinc stearate, and calcium stearate, all passing through a screen with 75 μm openings that were not spray dried granules of PVA, zinc stearate, and calcium stearate although having composition same as Example 26. The results were good.

Example 34 is the case of using a PVA containing an alkyl group at a terminal that had the other composition same as Example 26. Both 180°C and 190°C were more excellent, although slightly, in the blackening time period than Example 26.

Example 35 is the case of using a PVA obtained by copolymerizing ethylene that had the other composition same as Example 26. It was more excellent in the blackening time period than Example 26.

Example 36 is the case of using a PVA containing a carboxyl group at a terminal that had the other composition same as Example 26. It was more excellent in the blackening time period than Example 26. Compared with Example 37 described later, it was excellent in both the blackening time period and the colorability.

Example 37 is the case of using a PVA containing a carboxyl group at a terminal similar to Example 36, while the PVA had a degree of saponification of 40 mol%, lower than Example 36. Overall, the results were acceptable.

Example 38 is the case of using a PVA containing a sulfonic acid group at a terminal that had the other composition same as Example 26. It was more excellent in the blackening time period than Example 26.

In Examples 39 through 43, glycerin monostearate was blended as a lubricant into the composition of Examples 26 through 30. Any of the cases had an improved blackening time period and was also excellent in the colorability.

In Examples 44 through 48, glycerin monostearate was blended as a lubricant into the composition of Examples 34 through 38. Any of the cases had an improved blackening time period.

In contrast, Comparable Examples 15 and 16 show the results in a case of not using PVA together. Either case had an unsatisfactory level of the blackening time period and also had a low level of the colorability. It was similar even in a case of blending glycerin monostearate as a lubricant (Comparable Example 16).

Comparable Examples 17 and 18 show cases of a viscosity average degree of polymerization exceeding (1500) the range of the present invention and of a degree of saponification beyond (25 mol%) the range of the present invention, respectively. Since the PVA having a degree of saponification of 25 mol% was poor in water solubility, the PVA was forcibly ground and evaluation was made of a product of blending a simple blended product of a PVA powder, a zinc stearate powder, and a calcium stearate powder, all passing through a screen with 75 μm openings. Either Comparable Example 17 or 18 had an unsatisfactory level of the blackening time period and also had a low level of the colorability.

Further, Comparable Example 19 is a case of adding, not spray dried granules of PVA, zinc stearate, and calcium stearate similar to Example 33, a mixed powder of these powders simply blended therein while as a result of using not particularly micronized PVA, it used a mixed powder only 75 weight% of which passed through a screen with 75 μm openings. Compared with Example 33, the blackening time period was reduced and the colorability also decreased.

In Comparable Examples 20 through 22, glycerin monostearate was blended as a lubricant into the composition of Comparable Examples 17 through 19. In any of the cases, the blackening time period was unsatisfactory although slightly improved, and the colorability was also at a low level.

Further, a case of an extremely low amount of added PVA (Comparable Example 23) and, on the contrary, a case of an extremely high amount of added PVA (Comparable Example 24) were not satisfactory in both the blackening time period and the colorability, and the colorability seriously decreased.

In a case of an extremely low amount of added zinc compound and calcium compound (Comparable Example 25), the resin was degraded during roll kneading and not enough for evaluation. On the contrary, a case of an extremely high amount of added zinc compound and calcium compound (Comparable Example 26) was not satisfactory in both the blackening time period and the colorability.

In comparison of the amounts of the mixed powder (P) passing through a 75 μm screen among identical composition, those having 80 weight% or more (Examples 26 and 49) in the range defined by the present invention had a satisfactory level of both the blackening time period and the colorability, and those having a lubricant added to them (Examples 39 and 50) had a further improved performance. In contrast, any of those having less than 80 weight% (Comparable Examples 19 and 27) and those having a lubricant added to them (Comparable Examples 22 and 28) were not satisfactory in both the blackening time period and the colorability.

Example 51

(Preparation of Mixed Powder (P))

The PVA, having a degree of polymerization of 400 and having a degree of saponification of 80 mol%, obtained in a same manner as Example 1 was dissolved in distilled water to obtain 500 parts of a 5% aqueous solution. To this, 50 parts of zinc stearate (produced by NOF Corporation; trade name "Zinc Stearate") and 125 parts of calcium carbonate (produced by Bihoku Funka Kogyo Co., Ltd.; trade name "Softon 1800") were added, and in addition as a wetting agent, 0.1 parts of an acetylene glycol-based surfactant (produced by Nissin Chemical Industry Co., Ltd.; trade name "Surfynol 465") was added and stirred, thereby obtaining a slurry. The slurry thus obtained was granulated with a spray dryer (manufactured by Ohkawara Kakohki Co., Ltd.; L-8 type spray dryer) to obtain a mixed powder (P). From the composition of the slurry, the solid ratio of PVA (A) /zinc compound (B) / calcium compound (C) was 1/2/5, and the solid ratio of A/ (B + C) was 1/7. As the spray dried granules thus obtained were sieved through a 200 mesh screen (75 $\mu$m openings), 90% of them passed through the screen.

(Production of Polyvinyl Chloride Resin Composition)

In a porcelain beaker, 100 parts of polyvinyl chloride resin, 8 parts (1 part of PVA, 2 parts of zinc stearate, and 5 parts of calcium carbonate) of the mixed powder (P) obtained as above, and 1 part of calcium stearate (produced by NOF Corporation; trade name "Calcium Stearate") were added and mixed to obtain a polyvinyl chloride resin composition.

(Thermal Stability Test and Colorability Test)

Evaluation was made in a same manner as Example 1. Results are shown in Table 3.

Examples 52 through 55

In a method same as Example 51 other than modifying the alkali molar ratio during saponification, a PVA shown in Table 3 was obtained. Using the PVA, a polyvinyl chloride resin composition was obtained in a same manner as Example 51, and evaluation was made of the thermal stability and the colorability. Evaluation results are shown in Table 3.

Example 56

In Example 33, as the calcium compound (C), 5 parts of calcium carbonate was used instead of 1 part of calcium stearate. By simply blending each of the powders (A), (B), and (C) at a ratio of 1/2/5 (A/(B + C) = 1/7), a mixed powder (P) was prepared. Using the mixed powder (P), a polyvinyl chloride resin composition was obtained in a same manner as Example 51, and evaluation was made of the thermal stability and the colorability. Evaluation results are shown in Table 3.

Comparable Example 29

In a same manner as Example 51 other than adding 2 parts of zinc stearate passing through a screen with 75 $\mu$m openings, 5 parts of calcium carbonate passing through a screen with 75 $\mu$m openings, and 1 part of calcium stearate passing through a screen with 75 $\mu$m openings instead of the mixed powder (P) in the production of polyvinyl chloride resin composition, a polyvinyl chloride resin composition was obtained, and evaluation was made of the thermal stability and the colorability. Evaluation results are shown in Table 3.

Comparable Example 30

Using the PVA, having a degree of polymerization of 400 and having a degree of saponification of 25 mol%, used in Comparable Example 18, a polyvinyl chloride resin composition was obtained in a same manner as Example 56, and evaluation was made of the thermal stability and the colorability. Evaluation results are shown in Table 3.

Comparable Example 31

In a manner same as Example 56 other than omitting the grounding of PVA, a mixed powder (P) was obtained. Using the mixed powder (P), a polyvinyl chloride resin composition was obtained in a same manner as Example 56, and evaluation was made of the thermal stability and the colorability. Evaluation results are shown in Table 3.

Table 3

| | PVA (A) | | Mixed Powder (P) | | | | Evaluation Conditions and Results | | |
|---|---|---|---|---|---|---|---|---|---|
| | Degree of Polymerization | Degree of Saponification | Composition Ratio (parts/PVC 100 parts) | | | Passing through 75 μm Screen | Blackening Time Period [1] | Blackening Time Period [2] | Colorability |
| | | (mol%) | PVA (A) | Zinc Stearate (B) | Calcium Carbonate (C) | (weight%) | (min.) | (min.) | |
| Example 51 | 400 | 80 | 1 | 2 | 5 | 90 | 105 | 105 | A |
| Example 52 | 400 | 88 | 1 | 2 | 5 | 91 | 90 | 105 | A |
| Example 53 | 400 | 72 | 1 | 2 | 5 | 92 | 105 | 90 | A |
| Example 54 | 400 | 96 | 1 | 2 | 5 | 90 | 75 | 105 | A |
| Example 55 | 400 | 68 | 1 | 2 | 5 | 89 | 105 | 90 | A |
| Example 56 | 400 | 80 | 1[a] | 2[a] | 5[a] | 99 or more | 90 | 75 | A |
| Comparable Example 29 | none | none | none | 2[b] | 5[b] | 99 or more | 15 | 15 | D |
| Comparable Example 30 | 400 | 25 | 1[a] | 2[a] | 5[a] | 99 or more | 45 | 60 | C |
| Comparable Example 31 | 400 | 80 | 1[a] | 2[a] | 5[a] | 75 | 60 | 60 | B |

a) Not using spray dried particles, a simple mixed powder of PVA powder (A), zinc compound (B), and calcium compound (C) was used.
b) Not using spray dried particles, zinc compound (B) and calcium compound (C) were used.
1) Roll kneading temperature at 180°C
2) Roll kneading temperature at 190°C

Examples 51 through 55 show the cases of granulation by spray drying, using calcium carbonate instead of calcium stearate in Examples 26 through 30 in Table 2, together with the PVA (A) and the zinc stearate (B) and of using a mixed powder in the form of spray dried granules 80 weight% or more of them passing through 75 μm openings. Overall, the results were good, and in particular, Examples 51 through 53 having a degree of saponification within a range from 70 to 93 mol% were particularly excellent in the blackening time period at a kneading temperature with a test roll of either 180°C or 190°C.

Example 56 shows the case of blending a simple blended product, as the mixed powder (P) with calcium stearate into a polyvinyl chloride resin, of a PVA powder, zinc stearate, and calcium carbonate, all passing through a screen with 75 μm openings that were not spray dried granules of PVA, zinc stearate, and calcium carbonate although having composition same as Example 51. The results were good.

In contrast, Comparable Example 29 shows the results in a case of not using PVA together. It had an unsatisfactory level of the blackening time period and also had a low level of the colorability.

Comparable Example 30 shows the case of a degree of saponification beyond (25 mol%) the range of the present invention. Since the PVA having a degree of saponification of 25 mol% was poor in water solubility, the PVA was forcibly ground and evaluation was made of a product of blending a simple blended product, as the mixed powder (P) with calcium stearate into a polyvinyl chloride resin, of a PVA powder, a zinc stearate powder, and a calcium carbonate powder, all passing through a screen with 75 μm openings. It had an unsatisfactory level of the blackening time period also had a low level of the colorability.

Further, Comparable Example 31 is a case of adding, not spray dried granules of PVA, zinc stearate, and calcium carbonate similar to Example 56, a mixed powder of these powders simply blended therein, as the mixed powder (P) with calcium stearate into a polyvinyl chloride resin, while as a result of using not particularly micronized PVA, it used a mixed powder only 75 weight% of which passed through a screen with 75 μm openings. Compared with Example 56, the blackening time period was reduced and the colorability also decreased.

Example 57

(Preparation of Mixed Powder (P))

The PVA, having a degree of polymerization of 400 and having a degree of saponification of 80 mol%, obtained in a same manner as Example 1 was dissolved in distilled water to obtain 500 parts of a 5% aqueous solution. To this, 50 parts of zinc stearate (produced by NOF Corporation; trade name "Zinc Stearate"), and as the calcium compounds (C), 25 parts of calcium stearate (produced by NOF Corporation; trade name "Calcium Stearate") and 125 parts of calcium carbonate (produced by Bihoku Funka Kogyo Co., Ltd.; trade name "Softon 1800") were added, and in addition as a wetting agent, 0.1 parts of an acetylene glycol-based surfactant (produced by Nissin Chemical Industry Co., Ltd.; trade name "Surfynol 465") was added and stirred, thereby obtaining a slurry. The slurry thus obtained was granulated with a spray dryer (manufactured by Ohkawara Kakohki Co., Ltd.; L-8 type spray dryer) to obtain a mixed powder (P). From the composition of the slurry, the solid ratio of PVA (A) / zinc compound (B) / calcium compound (C) was 1/2/6, and the solid ratio of A/(B + C) was 1/8. As the spray dried granules thus obtained were sieved through a 200 mesh screen (75 μm openings), 90% of them passed through the screen.

(Production of Polyvinyl Chloride Resin Composition)

In a porcelain beaker, 100 parts of polyvinyl chloride resin and 9 parts (1 part of PVA, 2 parts of zinc stearate, and totally 6 parts of the calcium compound (C)) of the mixed powder (P) obtained as above were added and mixed to obtain a polyvinyl chloride resin composition.

(Thermal Stability Test and Colorability Test)

Evaluation was made in a same manner as Example 1. Results are shown in Table 4.

Examples 58 through 61

In a method same as Example 57 other than modifying the alkali molar ratio during saponification, a PVA shown in Table 4 was obtained. Using the PVA, a polyvinyl chloride resin composition was obtained in a same manner as Example 57, and evaluation was made of the thermal stability and the colorability. Evaluation results are shown in Table 4.
Table 4

| | PVA (A) | | Mixed Powder (P) | | | | Passing through 75 μm Screen | Evaluation Conditions and Results | | |
|---|---|---|---|---|---|---|---|---|---|---|
| | Degree of Polymerization | Degree of Saponification | Composition Ratio (parts/PVC 100 parts) | | | | | Blackening Time Period [1] | Blackening Time Period [2] | Colorability |
| | | (mol%) | PVA (A) | Zinc Stearate (B) | Calcium Stearate (C) | Calcium Carbonate (C) | (weight%) | (min.) | (min.) | |
| Example 57 | 400 | 80 | 1 | 2 | 1 | 5 | 90 | 120 | 135 | A |
| Example 58 | 400 | 88 | 1 | 2 | 1 | 5 | 91 | 105 | 135 | A |
| Example 59 | 400 | 72 | 1 | 2 | 1 | 5 | 92 | 120 | 105 | A |
| Example 60 | 400 | 96 | 1 | 2 | 1 | 5 | 90 | 90 | 120 | A |
| Example 61 | 400 | 68 | 1 | 2 | 1 | 5 | 89 | 105 | 105 | A |
| 1) Roll kneading temperature at 180°C 2) Roll kneading temperature at 190°C | | | | | | | | | | |

Examples 57 through 61 show the cases of using calcium stearate and calcium carbonate together as the calcium compounds (C) and granulating them by spray drying together with the PVA (A) and the zinc compound (B) and of using a mixed powder in the form of spray dried granules 80 weight% or more of them passing through 75 μm openings. Overall, the results were good, and in particular, they were even more excellent in the blackening time period than Examples 26 through 30 in Table 2 and Examples 51 through 55 in Table 3, and Examples 57 through 59 having a degree of saponification within a range from 70 to 93 mol% were particularly excellent in the blackening time period at a kneading temperature with a test roll of either 180°C or 190°C.

Example 62

(Preparation of Mixed Powder (P))

The PVA obtained in a same manner as Example 1 was dissolved in distilled water to obtain 500 parts of a 5% aqueous solution. To this, 25 parts of calcium stearate (produced by NOF Corporation; trade name "Calcium Stearate") was added, and in addition as a wetting agent, 0.1 parts of an acetylene glycol-based surfactant (produced by Nissin Chemical Industry Co., Ltd.; trade name "Surfynol 465") was added and stirred, thereby obtaining a slurry. The slurry thus obtained was granulated with a spray dryer (manufactured by Ohkawara Kakohki Co., Ltd.; L-8 type spray dryer), and 50 parts of zinc stearate (produced by NOF Corporation; trade name "Zinc Stearate") was added to this to obtain a mixed powder (P). From the composition of the slurry and the amount of added zinc stearate, the solid ratio of PVA (A) / zinc compound (B) / calcium compound (C) was 1/2/1, and the solid ratio of A/(B + C) was 1/3. As the spray dried granules thus obtained were sieved through a 200 mesh screen (75 μm openings), 90% of them passed through the screen.

(Production of Polyvinyl Chloride Resin Composition)

In a porcelain beaker, 100 parts of polyvinyl chloride resin obtained in a same manner as Example 1 and 4 parts (1 part of PVA, 2 parts of zinc stearate, and 1 part of calcium stearate) of the mixed powder (P) obtained as above were added and mixed to obtain a polyvinyl chloride resin composition. Using the polyvinyl chloride resin composition thus obtained, evaluation was made of the thermal stability and the colorability in a same manner as Example 1. Evaluation results are shown in Table 5.

Examples 63 through 66

In a method same as Example 1 other than modifying the alkali molar ratio during saponification, a PVA shown in Table 5 was obtained. Using the PVA, a polyvinyl chloride resin composition was obtained in a same manner as Example 62, and evaluation was made of the thermal stability and the colorability. Evaluation results are shown in Table 5.

Examples 67 and 68

In a method same as Example 1 other than modifying the weight of vinyl acetate and methanol to be charged and modifying the alkali molar ratio during saponification, a PVA shown in Table 5 was obtained. A polyvinyl chloride resin composition was obtained in a same manner as Example 62, and evaluation was made of the thermal stability and the colorability. Evaluation results are shown in Table 5.

Example 69

(Production of PVA)

Using the PVA, having a $CH_3$-$(CH_2)_{11}$-S group at one terminal of the molecules, obtained in a same manner as Example 9, a polyvinyl chloride resin composition was obtained in a same manner as Example 62, and evaluation was made of the thermal stability and the colorability. Evaluation results are shown in Table 5.

Example 70

Using the ethylene-modified PVA obtained in a same manner as Example 10, a polyvinyl chloride resin composition was obtained in a same manner as Example 62 and evaluation was made of the thermal stability and the colorability. Evaluation results are shown in Table 5.

Example 71

Using the PVA, having a carboxyl group (sodium carboxylate group) at one terminal in the molecules, obtained in a same manner as Example 11, a polyvinyl chloride resin composition was obtained in a same manner as Example 62, and evaluation was made of the thermal stability and the colorability. Evaluation results are shown in Table 5.

Example 72

Using the PVA, having a carboxyl group (sodium carboxylate group) at one terminal in the molecules, obtained in a same manner as Example 12, a polyvinyl chloride resin composition was obtained in a same manner as Example 62, and evaluation was made of the thermal stability and the colorability. Evaluation results are shown in Table 5.

Example 73

Using the PVA, having a sulfonic acid group (sodium sulfonate group) at one terminal in the molecules, obtained in a same manner as Example 13, a polyvinyl chloride resin composition was obtained in a same manner as Example 62, and evaluation was made of the thermal stability and the colorability. Evaluation results are shown in Table 5.

Examples 74 through 83

In a same manner as Examples 62 through 66 and 69 through 73 other than further adding and mixing 1 part of glycerin monostearate as a lubricant based on 100 parts of a vinyl chloride resin in the production of polyvinyl chloride resin composition in Examples 62 through 66 and 69 through 73, a polyvinyl chloride resin composition was obtained. Using the polyvinyl chloride resin composition thus obtained, evaluation was made of the thermal stability and the colorability. Evaluation results are shown in Table 5.

Example 84

The PVA obtained in a same manner as Example 1 was dissolved in distilled water to obtain 167 parts of a 15% aqueous solution. To this, 25 parts of calcium stearate (produced by NOF Corporation; trade name "Calcium Stearate") was added, and in a same manner as Example 62 other than not adding a wetting agent, the slurry was granulated, and 50 parts of zinc stearate (produced by NOF Corporation; trade name "Zinc Stearate") was added to this to obtain a mixed powder (P). From the composition of the slurry and the amount of added zinc stearate, the solid ratio of PVA (A) / zinc compound (B) / calcium compound (C) was 1/2/1, and the solid ratio of A/(B + C) was 1/3. As the spray dried granules thus obtained were sieved through a 200 mesh screen (75 $\mu$m openings), 83% of them passed through the screen.
Using the mixed powder (P), a polyvinyl chloride resin composition was obtained in a same manner as Example 62, and evaluation was made of the thermal stability and the colorability. Evaluation results are shown in Table 5.

Example 85

In a same manner as Example 84 other than further adding and mixing 1 part of glycerin monostearate as a lubricant based on 100 parts of a vinyl chloride resin in the production of polyvinyl chloride resin composition in Example 84, a polyvinyl chloride resin composition was obtained. Using the polyvinyl chloride resin composition thus obtained, evaluation was made of the thermal stability and the colorability. Evaluation results are shown in Table 5.

Comparable Example 32

In a method same as Example 1 other than modifying the weight of vinyl acetate and methanol to be charged and modifying the alkali molar ratio during saponification, a PVA shown in Table 5 was obtained. Using the PVA, a polyvinyl chloride resin composition was obtained in a same manner as Example 62, and evaluation was made of the thermal stability and the colorability. Evaluation results are shown in Table 5.

Comparable Example 33

In a same manner as Comparable Example 32 other than further adding and mixing 1 part of glycerin monostearate as a lubricant based on 100 parts of a vinyl chloride resin in the production of polyvinyl chloride resin composition in Comparable Example 32, a polyvinyl chloride resin composition was obtained. Using the polyvinyl chloride resin composition thus obtained, evaluation was made of the thermal stability and the colorability. Evaluation results are shown in Table 5.

Comparable Examples 34 through 36

In a manner same as Example 62 other than adjusting the mixing ratio of the aqueous PVA solution, the zinc stearate and the calcium stearate so as to make the solid ratio of (A), (B), and (C) to be a ratio shown in Table 5, a mixed powder (P) was obtained. Using the mixed powder (P), a polyvinyl chloride resin composition was obtained in a same manner as Example 62, and evaluation was made of the thermal stability and the colorability. Evaluation results are shown in Table 5.

Comparable Example 37

The PVA obtained in a same manner as Example 1 was dissolved in distilled water to obtain 100 parts of a 25% aqueous solution. To this, 25 parts of calcium stearate (produced by NOF Corporation; trade name "Calcium Stearate") was added, and in a same manner as Example 62 other than not adding a wetting agent, the slurry was granulated, and 50 parts of zinc stearate (produced by NOF Corporation; trade name "Zinc Stearate") was added to this to obtain a mixed powder (P). From the composition of the slurry and the amount of added zinc stearate, the solid ratio of PVA (A) / zinc compound (B) / calcium compound (C) was 1/2/1, and the solid ratio of A/(B + C) was 1/3. As the spray dried granules thus obtained were sieved through a 200 mesh screen (75 $\mu$m openings), 75% of them passed through the screen.
Using the mixed powder (P), a polyvinyl chloride resin composition was obtained in a same manner as Example 62, and evaluation was made of the thermal stability and the colorability. Evaluation results are shown in Table 5.

Comparable Example 38

In a same manner as Comparable Example 37 other than further adding and mixing 1 part of glycerin monostearate as a lubricant based on 100 parts of a vinyl chloride resin in the production of polyvinyl chloride resin composition in Comparable Example 37, a polyvinyl chloride resin composition was obtained. Using the polyvinyl chloride resin composition thus obtained, evaluation was made of the thermal stability and the colorability. Evaluation results are shown in Table 5.
In Table 5, the results of Example 33 and Comparable Examples 18, 19, 22, and 23 are shown again for reference.
Table 5

| | PVA (A) | | | Mixed Powder (P) | | | | | Evaluation Conditions and Results | | |
|---|---|---|---|---|---|---|---|---|---|---|---|
| | Degree of Polymerization | Degree of Saponification (mol%) | Modified Type and Modified Site | Spray Dry Composition Ratio (parts/PVC 100 parts) | | Zinc Stearate (B) (parts/PVC 100 parts ) | Passing through 75 μm Screen (weight%) | Glycerin Monostearate (parts/PVC 100 parts) | Blackening Time Period [1] (min.) | Blackening Time Period [2] (min.) | Colorability |
| | | | | PVA (A) | Calcium Stearate (C) | | | | | | |
| Example 62 | 400 | 80 | none | 1 | 1 | 2 | 90 | 0 | 105 | 90 | A |
| Example 63 | 400 | 88 | none | 1 | 1 | 2 | 91 | 0 | 90 | 105 | A |
| Example 64 | 400 | 72 | none | 1 | 1 | 2 | 92 | 0 | 105 | 75 | A |
| Example 65 | 400 | 96 | none | 1 | 1 | 2 | 90 | 0 | 75 | 90 | A |
| Example 66 | 400 | 68 | none | 1 | 1 | 2 | 89 | 0 | 90 | 75 | A |
| Example 67 | 750 | 80 | none | 1 | 1 | 2 | 86 | 0 | 90 | 75 | A |
| Example 68 | 950 | 80 | none | 1 | 1 | 2 | 88 | 0 | 75 | 75 | A |
| Example 33 | 400 | 80 | none | 1[a] | 1[a] | 2[a] | 99 or more | 0 | 90 | 75 | A |
| Example 69 | 400 | 80 | terminal $C_{12}H_{25}$ | 1 | 1 | 2 | 92 | 0 | 120 | 105 | A |
| Example 70 | 400 | 80 | ethylene copolymer [c] | 1 | 1 | 2 | 93 | 0 | 120 | 105 | A |
| Example 71 | 400 | 80 | terminal COONa | 1 | 1 | 2 | 88 | 0 | 120 | 105 | A |
| Example 72 | 400 | 40 | terminal COONa | 1 | 1 | 2 | 86 | 0 | 90 | 90 | B |
| Example 73 | 400 | 80 | terminal $SO_3Na$ | 1 | 1 | 2 | 87 | 0 | 120 | 90 | A |
| Example 74 | 400 | 80 | none | 1 | 1 | 2 | 90 | 1 | 120 | 105 | A |

(continued)

| | PVA (A) | | | Mixed Powder (P) | | | | Glycerin Monostearate (parts/PVC 100 parts) | Evaluation Conditions and Results | | |
|---|---|---|---|---|---|---|---|---|---|---|---|
| | Degree of Polymerization | Degree of Saponification | Modified Type and Modified Site | Spray Dry Composition Ratio (parts/PVC 100 parts) | | Zinc Stearate (B) | Passing through 75 $\mu$m Screen | | Blackening Time Period [1] | Blackening Time Period [2] | Colorability |
| | | (mol%) | | PVA (A) | Calcium Stearate (C) | (parts/PVC 100 parts ) | (weight%) | (parts) | (min.) | (min.) | |
| Example 75 | 400 | 88 | none | 1 | 1 | 2 | 91 | 1 | 105 | 120 | A |
| Example 76 | 400 | 72 | none | 1 | 1 | 2 | 92 | 1 | 105 | 90 | A |
| Example 77 | 400 | 96 | none | 1 | 1 | 2 | 90 | 1 | 90 | 105 | A |
| Example 78 | 400 | 68 | none | 1 | 1 | 2 | 89 | 1 | 75 | 105 | A |
| Example 79 | 400 | 80 | terminal $C_{12}H_{25}$ | 1 | 1 | 2 | 92 | 1 | 120 | 105 | A |
| Example 80 | 400 | 80 | ethylene copolymer c) | 1 | 1 | 2 | 93 | 1 | 120 | 105 | A |
| Example 81 | 400 | 80 | terminal COONa | 1 | 1 | 2 | 88 | 1 | 120 | 90 | A |
| Example 82 | 400 | 40 | terminal COONa | 1 | 1 | 2 | 86 | 1 | 90 | 75 | B |
| Example 83 | 400 | 80 | terminal $SO_3Na$ | 1 | 1 | 2 | 87 | 1 | 120 | 90 | A |
| Example 84 | 400 | 80 | none | 1 | 1 | 2 | 83 | 0 | 90 | 75 | B |
| Example 85 | 400 | 80 | none | 1 | 1 | 2 | 83 | 1 | 90 | 90 | 8 |
| Comparable Example 32 | 1500 | 80 | none | 1 | 1 | 2 | 92 | 0 | 45 | 45 | B |
| Comparable Example 18 | 400 | 25 | none | 1 a) | 1 a) | 2 a) | 99 or more | 0 | 45 | 45 | C |

| | PVA (A) | | | Mixed Powder (P) | | | | | Evaluation Conditions and Results | | |
|---|---|---|---|---|---|---|---|---|---|---|---|
| | Degree of Polymerization | Degree of Saponification | Modified Type and Modified Site | Spray Dry Composition Ratio (parts/PVC 100 parts) | | Zinc Stearate (B) | Passing through 75 μm Screen | Glycerin Monostearate (parts/PVC 100 parts) | Blackening Time Period [1] | Blackening Time Period [2] | Colorability |
| | | (mol%) | | PVA (A) | Calcium Stearate (C) | (parts/PVC 100 parts) | (weight%) | | (min.) | (min.) | |
| Comparable Example 19 | 400 | 80 | none | 1[a] | 1[a] | 2[a] | 75 | 0 | 60 | 45 | B |
| Comparable Example 33 | 1500 | 80 | none | 1 | 1 | 2 | 92 | 1 | 60 | 60 | B |
| Comparable Example 22 | 400 | 80 | none | 1[a] | 1[a] | 2[a] | 75 | 1 | 75 | 60 | B |
| Comparable Example 23 | 400 | 80 | none | 0.001[a] | 1[a] | 2[a] | 99 or more | 0 | 15 | 15 | D |
| Comparable Example 34 | 400 | 80 | none | 15 | 1 | 1 | 86 | 0 | 120 | 120 | D |
| Comparable Example 35 | 400 | 80 | none | 1 | 0.001 | 0.002 | 83 | 0 | -* | -* | -* |
| Comparable Example 36 | 400 | 80 | none | 1 | 7.5 | 15 | 90 | 0 | 30 | 30 | D |
| Comparable Example 37 | 400 | 80 | none | 1 | 1 | 2 | 75 | 0 | 60 | 60 | B |

(continued)

| | PVA (A) | | | Mixed Powder (P) | | | | Glycerin Monostearate (parts/PVC 100 parts) | Evaluation Conditions and Results | | |
|---|---|---|---|---|---|---|---|---|---|---|---|
| | Degree of Polymerization | Degree of Saponification | Modified Type and Modified Site | Spray Dry Composition Ratio (parts/PVC 100 parts) | | Zinc Stearate (B) | Passing through 75 μm Screen | | Blackening Time Period [1] | Blackening Time Period [2] | Colorability |
| | | (mol%) | | PVA (A) | Calcium Stearate (C) | (parts/PVC 100 parts) | (weight%) | | (min.) | (min.) | |
| Comparable Example 38 | 400 | 80 | none | 1 | 1 | 2 | 75 | 1 | 75 | 60 | B |

a) Not using spray dried particles, a simple mixed powder of PVA powder (A), zinc compound (B), and calcium compound (C) was used.
b) Not using spray dried particles, zinc compound (B) and calcium compound (C) were used.
c) Ethylene modified amount: 5 mol%
1) Roll kneading temperature at 180°C
2) Roll kneading temperature at 190°C
* Seriously colored during roll kneading

Examples 62 through 66 show the cases of using a mixed powder of a PVA having a degree of saponification within a range from 60 to 99.9 mol% and having a viscosity average degree of polymerization of 400 in the form of spray dried granules with calcium stearate with zinc stearate added thereto, 80 weight% or more of them passing through a screen with 75 μm openings. Overall, the results were good, and the blackening time period was longer than Examples 67 and 68 described later and 33. In particular, Examples 62 through 64 having a degree of saponification within a range from 70 to 93 mol% were particularly excellent in the blackening time period at a kneading temperature with a test roll of either 180°C or 190°C.

Examples 67 and 68 show the cases of a degree of saponification of 80 mol% and a viscosity average degree of polymerization of 750 and 950. Overall, the results were good.

Example 69 is the case of using a PVA containing an alkyl group at a terminal that had the other composition same as Example 62. Both 180°C and 190°C were more excellent, although slightly, in the blackening time period than Example 62.

Example 70 is the case of using a PVA obtained by copolymerizing ethylene that had the other composition same as Example 62. It was more excellent in the blackening time period than Example 62.

Example 71 is the case of using a PVA containing a carboxyl group at a terminal that had the other composition same as Example 62. It was more excellent in the blackening time period than Example 62. Compared with Example 72 described later, it was excellent in both the blackening time period and the colorability.

Example 72 is the case of using a PVA containing a carboxyl group at a terminal similar to Example 71, while the PVA had a degree of saponification of 40 mol%, lower than Example 71. Overall, the results were acceptable.

Example 73 is the case of using a PVA containing a sulfonic acid group at a terminal that had the other composition same as Example 62. It was more excellent in the blackening time period than Example 62.

In Examples 74 through 78, glycerin monostearate was blended as a lubricant into the composition of Examples 62 through 66. Any of the cases had an improved blackening time period and was also excellent in the colorability.

In Example 79 through 83, glycerin monostearate was blended as a lubricant into the composition of Examples 69 through 73. Any of the cases had an improved blackening time period.

Comparable Examples 32 and 18 show cases of a viscosity average degree of polymerization exceeding (1500) the range of the present invention and of a degree of saponification beyond (25 mol%) the range of the present invention, respectively. Since the PVA having a degree of saponification of 25 mol% was poor in water solubility, the PVA was forcibly ground and evaluation was made of a product of blending a simple blended product of a PVA powder, zinc stearate, and a calcium stearate powder, all passing through a screen with 75 μm openings. Either Comparable Example 32 or 18 had an unsatisfactory level of the blackening time period and also had a low level of the colorability.

In Comparable Example 33, glycerin monostearate was blended as a lubricant into the composition of Comparable Example 32. The blackening time period was unsatisfactory although slightly improved, and the colorability was also at a low level.

Further, a case of an extremely low amount of added PVA (Comparable Example 23) and, on the contrary, a case of an extremely high amount of added PVA (Comparable Example 34) were not satisfactory in both the blackening time period and the colorability, and the colorability seriously decreased.

In a case of an extremely low amount of added zinc compound and calcium compound (Comparable Example 35), the resin was degraded during roll kneading and not enough for evaluation. On the contrary, a case of an extremely high amount of added zinc compound and calcium compound (Comparable Example 36) was not satisfactory in both the blackening time period and the colorability.

In comparison of the amounts of the mixed powder (P) passing through a 75 μm screen among identical composition, those having 80 weight% or more (Examples 62 and 84) in the range defined by the present invention had a satisfactory level of both the blackening time period and the colorability, and those having a lubricant added to them (Examples 74 and 85) had a further improved performance. In contrast, any of those having less than 80 weight% (Comparable Examples 19 and 37) and those having a lubricant added to them (Comparable Examples 22 and 38) were not satisfactory in both the blackening time period and the colorability.

Example 86

(Preparation of Mixed Powder (P))

The PVA, having a degree of polymerization of 400 and having a degree of saponification of 80 mol%, obtained in a same manner as Example 1 was dissolved in distilled water to obtain 500 parts of a 5% aqueous solution. To this, as the calcium compounds (C), 25 parts of calcium stearate (produced by NOF Corporation; trade name "Calcium Stearate") and 125 parts of calcium carbonate (produced by Bihoku Funka Kogyo Co., Ltd.; trade name "Softon 1800") were added, and in addition as a wetting agent, 0.1 parts of an acetylene glycol-based surfactant (produced by Nissin Chemical Industry Co., Ltd.; trade name "Surfynol 465") was added and stirred, thereby obtaining a slurry. The slurry thus obtained was granulated with a spray dryer (manufactured by Ohkawara Kakohki Co., Ltd.; L-8 type spray dryer), and 50 parts of zinc stearate (produced by NOF Corporation; trade name "Zinc Stearate") was added to this to obtain a mixed powder (P). From the composition of the slurry and the amount of added zinc stearate, the solid ratio of PVA (A) / zinc compound (B) / calcium compound (C) was 1/2/6, and the solid ratio of A/(B + C) was 1/8. As the mixed powder (P) thus obtained were sieved through a 200 mesh screen (75 μm openings), 90% of them passed through the screen.

(Production of Polyvinyl Chloride Resin Composition)

In a porcelain beaker, 100 parts of polyvinyl chloride resin and 9 parts (1 part of PVA, 2 parts of zinc stearate, and totally 6 parts of the calcium compound (C)) of the mixed powder (P) obtained as above were added and mixed to obtain a polyvinyl chloride resin composition.

(Thermal Stability Test and Colorability Test)

Evaluation was made in a same manner as Example 1. Results are shown in Table 6.

Examples 87 through 90

In a method same as Example 1 other than modifying the alkali molar ratio during saponification, a PVA shown in Table 6 was obtained. Using the PVA, a polyvinyl chloride resin composition was obtained in a same manner as Example 86, and evaluation was made of the thermal stability and the colorability. Evaluation results are shown in Table 6.

Example 91

In Example 33, as the calcium compound (C), 5 parts of calcium carbonate was used together with 1 part of calcium stearate. By simply blending each of the powders (A), (B), and (C) at a ratio of 1/2/6 (A/(B + C) = 1/8), a mixed powder (P) was prepared. Using the mixed powder (P), a polyvinyl chloride resin composition was obtained in a same manner as Example 86, and evaluation was made of the thermal stability and the colorability. Evaluation results are shown in Table 6.

Comparable Example 39

In a same manner as Example 86 other than adding 2 parts of zinc stearate passing through a screen with 75 μm openings, 5 parts of calcium carbonate passing through a screen with 75 μm openings, and 1 part of calcium stearate passing through a screen with 75 μm openings instead of the mixed powder (P) in the production of polyvinyl chloride resin composition, a polyvinyl chloride resin composition was obtained, and evaluation was made of the thermal stability and the colorability. Evaluation results are shown in Table 6.

Comparable Example 40

Using the PVA, having a degree of polymerization of 400 and having a degree of saponification of 25 mol%, used in Comparable Example 18, a polyvinyl chloride resin composition was obtained in a same manner as Example 91, and evaluation was made of the thermal stability and the colorability. Evaluation results are shown in Table 6.

Comparable Example 41

In a manner same as Example 91 other than omitting the grounding of PVA, a mixed powder (P) was obtained. Using the mixed powder (P), a polyvinyl chloride resin composition was obtained in a same manner as Example 91, and evaluation was made of the thermal stability and the colorability. Evaluation results are shown in Table 6.

Table 6

| | PVA (A) | | Mixed Powder (P) | | | | | Evaluation Conditions and Results | | |
|---|---|---|---|---|---|---|---|---|---|---|
| | Degree of Polymerization | Degree of Saponification (mol%) | Spray Dry Composition Ratio (parts/PVC 100 parts) | | | Zinc Stearate (B) (parts/PVC 100 parts) | Passing through 75 μm Screen (weight%) | Blackening Time Period [1] (min.) | Blackening Time Period [2] (min.) | Colorability |
| | | | PVA (A) | Calcium Stearate (C) | Calcium Carbonate (C) | | | | | |
| Example 86 | 400 | 80 | 1 | 1 | 5 | 2 | 90 | 105 | 120 | A |
| Example 87 | 400 | 88 | 1 | 1 | 5 | 2 | 91 | 90 | 120 | A |
| Example 88 | 400 | 72 | 1 | 1 | 5 | 2 | 92 | 105 | 90 | A |
| Example 89 | 400 | 96 | 1 | 1 | 5 | 2 | 90 | 75 | 105 | A |
| Example 90 | 400 | 68 | 1 | 1 | 5 | 2 | 89 | 90 | 90 | A |
| Example 91 | 400 | 80 | 1[a] | 1[a] | 5[a] | 2[a] | 99 or more | 90 | 75 | A |
| Comparable Example 39 | none | none | none | 1[b] | 5[b] | 2[b] | 99 or more | 15 | 15 | D |
| Comparable Example 40 | 400 | 25 | 1[a] | 1[a] | 5[a] | 2[a] | 99 or more | 45 | 60 | C |
| Comparable Example 41 | 400 | 80 | 1[a] | 1[a] | 5[a] | 2[a] | 75 | 60 | 60 | B |

a) Not using spray dried particles, a simple mixed powder of PVA powder (A), zinc compound (B), and calcium compound (C) was used.
b) Not using spray dried particles, zinc compound (B) and calcium compound (C) were used.
1) Roll kneading temperature at 180°C
2) Roll kneading temperature at 190°C

Examples 86 through 90 show the cases of granulation by spray drying, using calcium carbonate together with calcium stearate in Examples 62 through 66 in Table 5, together with the PVA (A) and of using a mixed powder, with the zinc stearate (B) further added therein, 80 weight% or more of them passing through a screen with 75 μm openings. Overall, the results were good, and in particular, Examples 86 through 88 having a degree of saponification within a range from 70 to 93 mol% were particularly excellent in the blackening time period at a kneading temperature with a test roll of either 180°C or 190°C.

Example 91 shows the case of blending a simple blended product, as the mixed powder (P) with a polyvinyl chloride resin, of a PVA powder, zinc stearate, calcium stearate, and calcium carbonate, all passing through a screen with 75 μm openings that were not spray dried granules of PVA, calcium stearate, and calcium carbonate although having composition same as Example 86. The results were good.

In contrast, Comparable Example 39 shows the results in a case of not using PVA together. Either case had an unsatisfactory level of the blackening time period and also had a low level of the colorability.

Comparable Example 40 shows the case of a degree of saponification beyond (25 mol%) the range of the present invention. Since the PVA having a degree of saponification of 25 mol% was poor in water solubility, the PVA was forcibly ground and evaluation was made of a product of blending a simple blended product, as the mixed powder (P) into a polyvinyl chloride resin, of a PVA powder, a zinc stearate powder, a calcium stearate powder, and a calcium carbonate powder, all passing through a screen with 75 μm openings. It had an unsatisfactory level of the blackening time period also had a low level of the colorability.

Further, Comparable Example 41 is a case of adding, not spray dried granules of PVA and calcium carbonate similar to Example 91, a mixed powder of these powders simply blended therein while as a result of using not particularly micronized PVA, it used a mixed powder only 75 weight% of which passed through a screen with 75 μm openings. Compared with Example 91, the blackening time period was reduced and the colorability also decreased.

From the above results, it is profitable to use a polyvinyl chloride resin composition of the present claims because the blackening time period is long, the thermal stability is excellent, and the level of colorability is also high.

As shown in Examples, according to the present invention, a vinyl chloride resin composition is provided that is excellent in the thermal stability while being molded and allows obtaining a less colored molded article.

**Claims**

1. A thermal stabilizer for polyvinyl chloride, comprising a mixed powder (P) containing a vinyl alcohol-based polymer (A) having an average degree of saponification from 30 to 99.9 mol% and having a viscosity average degree of polymerization of 1000 or less, and a zinc compound (B),
   wherein a weight ratio A/B of (A) and (B) falls within a range from 1/10 to 10/1, and the mixed powder (P) has 80 weight% or more of particles passing through a screen with 75 μm openings.

2. The thermal stabilizer for polyvinyl chloride according to claim 1, wherein the mixed powder (P) further contains a calcium compound (C), and a weight ratio A/(B + C) of (A) to a total amount of (B) and (C) falls within a range from 1/20 to 10/2.

3. The thermal stabilizer for polyvinyl chloride according to claim 1, wherein the mixed powder (P) is obtained by spray drying a slurry having the zinc compound (B) dispersed in an aqueous solution of the vinyl alcohol-based polymer (A).

4. The thermal stabilizer for polyvinyl chloride according to claim 2, wherein the mixed powder (P) is obtained by spray drying a slurry having the zinc compound (B) and the calcium compound (C) dispersed in an aqueous solution of the vinyl alcohol-based polymer (A).

5. The thermal stabilizer for polyvinyl chloride according to claim 2, wherein the mixed powder (P) is obtained by mixing the zinc compound (B) with a powder obtained by spray drying a slurry having the calcium compound (C) dispersed in an aqueous solution of the vinyl alcohol-based polymer (A).

6. The thermal stabilizer for polyvinyl chloride according to claim 2, wherein the mixed powder (P) is obtained by mixing the calcium compound (C) with a powder obtained by spray drying a slurry having the zinc compound (B) dispersed in an aqueous solution of the vinyl alcohol-based polymer (A).

7. The thermal stabilizer for polyvinyl chloride according to any one of claims 1 through 6, wherein the vinyl alcohol-based polymer (A) has an alkyl group, at a terminal, having a carbon number of 6 or more.

**8.** The thermal stabilizer for polyvinyl chloride according to any one of claims 1 through 7, wherein the vinyl alcohol-based polymer (A) contains from 0.1 to 20 mol% of ethylene units as a copolymer component.

**9.** The thermal stabilizer for polyvinyl chloride according to any one of claims 1 through 8, wherein the vinyl alcohol-based polymer (A) has at least one type of functional group, at a terminal, selected from a group consisting of a carboxyl group, a sulfonic acid group, and a salt thereof.

**10.** A polyvinyl chloride resin composition, comprising: from 0.1 to 10 parts by weight of the thermal stabilizer for polyvinyl chloride according to any one of claims 1 through 9 based on 100 parts by weight of a polyvinyl chloride resin.

**11.** The polyvinyl chloride resin composition according to claim 10, further comprising from 0.001 to 10 parts by weight of a lubricant based on 100 parts by weight of the polyvinyl chloride resin.

**12.** The polyvinyl chloride resin composition according to claim 11, wherein the lubricant is a fatty acid ester of polyol.

**13.** The polyvinyl chloride resin composition according to claim 12, wherein the fatty acid ester of polyol is glycerin monostearate.

**14.** A method of producing the thermal stabilizer for polyvinyl chloride of claim 1, comprising the steps of:

producing a slurry by dispersing the zinc compound (B) in an aqueous solution of the vinyl alcohol-based polymer (A); and obtaining the mixed powder (P) by spray drying the slurry.

**15.** A method of producing the thermal stabilizer for polyvinyl chloride of claim 2, comprising the steps of:

producing a slurry by dispersing the zinc compound (B) and the calcium compound (C) in an aqueous solution of the vinyl alcohol-based polymer (A); and obtaining the mixed powder (P) by spray drying the slurry.

**16.** A method of producing the thermal stabilizer for polyvinyl chloride of claim 2, comprising the steps of:

producing a slurry by dispersing the calcium compound (C) in an aqueous solution of the vinyl alcohol-based polymer (A); obtaining a powder by spray drying the slurry; and obtaining, by mixing the zinc compound (B) with the powder, the mixed powder (P).

**17.** A method of producing the thermal stabilizer for polyvinyl chloride of claim 2, comprising the steps of:

producing a slurry by dispersing the zinc compound (B) in an aqueous solution of the vinyl alcohol-based polymer (A); obtaining a powder by spray drying the slurry; and
obtaining, by mixing the calcium compound (C) with the powder, the mixed powder (P).

**18.** A method of producing a polyvinyl chloride resin composition, comprising the step of mixing from 0.1 to 10 parts by weight of a thermal stabilizer for polyvinyl chloride obtained by the method according to any one of claims 14 through 17 based on 100 parts by weight of a polyvinyl chloride resin.

**19.** The method of producing a polyvinyl chloride resin composition according to claim 18, further comprising the step of adding from 0.001 to 10 parts by weight of a lubricant based on 100 parts by weight of a polyvinyl chloride resin.

**EP 2 532 708 A1**

<table>
<tr><td colspan="2" align="center"><b>INTERNATIONAL SEARCH REPORT</b></td><td colspan="2">International application No.<br>PCT/JP2011/051885</td></tr>
</table>

| | |
|---|---|
| **A. CLASSIFICATION OF SUBJECT MATTER**<br>*C08L27/06*(2006.01)i, *C08J3/12*(2006.01)i, *C08J3/22*(2006.01)i, *C08K3/18*(2006.01)i, *C08K5/00*(2006.01)i, *C08K5/098*(2006.01)i, *C08L29/04*(2006.01)i | |

According to International Patent Classification (IPC) or to both national classification and IPC

**B. FIELDS SEARCHED**

Minimum documentation searched (classification system followed by classification symbols)
C08L27/06, C08J3/12, C08J3/22, C08K3/18, C08K5/00, C08K5/098, C08L29/04

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
WPI

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2009/157401 A1 (Kuraray Co., Ltd.),<br>30 December 2009 (30.12.2009),<br>claims; paragraph [0032]; examples<br>(Family: none) | 10-13<br>1-9,14-19 |
| A | JP 04-117446 A (Sumitomo Chemical Co., Ltd.),<br>17 April 1992 (17.04.1992),<br>entire text<br>(Family: none) | 1-19 |

☐ Further documents are listed in the continuation of Box C.     ☐ See patent family annex.

| | |
|---|---|
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| | |
|---|---|
| Date of the actual completion of the international search<br>24 March, 2011 (24.03.11) | Date of mailing of the international search report<br>12 April, 2011 (12.04.11) |
| Name and mailing address of the ISA/<br>Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 50092947 A
- JP 54081359 A
- JP 57147552 A
- JP 60238345 A
- JP 1178543 A
- JP 6287387 A
- JP 9003286 A
- JP 9031281 A
- JP 59166505 A
- JP 1240501 A
- WO 9115518 A1

### Non-patent literature cited in the description

- *Japanese Journal of Polymer Science and Technology,* 1990, vol. 47 (3), 197
- *Japanese Journal of Polymer Science and Technology,* 1990, vol. 47 (6), 509
- *Japanese Journal of Polymer Science and Technology,* 1993, vol. 50 (2), 65
- *Polymers & Polymer Composites,* 2003, vol. 11, 649
- *Journal of the Adhesion Society of Japan,* 2007, vol. 43 (2), 43